# EUROPÄISCHE PATENTSCHRIFT

(11) **EP 2 130 256 B1**
(45) Veröffentlichungstag und Bekanntmachung des Hinweises auf die Patenterteilung: **09.09.2015**
(21) Anmeldenummer: 08715806.9
(22) Anmeldetag: 12.02.2008
(51) Int. Cl.: H01M 8/02, H01M 8/24

(54) **BRENNSTOFFZELLENSTACK IN LEICHTBAUWEISE**
LIGHTWEIGHT FUEL CELL STACK
empilement de piles à combustible de construction légère

(30) Priorität: 12.02.2007 DE 102007007704
(43) Veröffentlichungstag der Anmeldung: 09.12.2009
(73) Patentinhaber: Fraunhofer-Gesellschaft zur Förderung der angewandten Forschung e.V., 80686 München (DE)
(72) Erfinder: HAHN, Robert, 13156 Berlin (DE)
(74) Vertreter: Pfenning, Meinig & Partner GbR
(86) Internationale Anmeldenummer: PCT/EP2008/001205
(87) Internationale Veröffentlichungsnummer: WO 2008/098791

(56) Entgegenhaltungen:
- WO-A-01/48852
- DE-A1- 10 217 034
- US-A1- 2006 216 568
- US-A1- 2006 269 821
- US-B1- 6 503 650

## Beschreibung

Die Erfindung betrifft einen Brennstoffzellenstack in Leichtbauweise, welcher mindestens eine Brennstoffzelle und mindestens zwei Separatoren aufweist. Die Separatorenstrukturen sind daraufhin optimiert, eine möglichst gute passive Belüftung der Brennstoffzelle zu ermöglichen und möglichst leicht zu sein, sowie gleichzeitig die an der Kathode rekombinierten Ionenprodukte auszuführen. Insbesondere kann die Brennstoffzelle als Bi-Brennstoffzelle ausgebildet sein.

Brennstoffzellen sind geeignet, aus chemischen Energieträgern elektrische Energie zu gewinnen, ohne dabei den Restriktionen des Carnot-Prozesses zu unterliegen. Um die Leistung von Brennstoffzellen zu erhöhen werden diese oft in so genannten Brennstoffzellenstacks angeordnet, in welchen mehrere Brennstoffzellen nebeneinander oder gestapelt miteinander verschaltet werden, und sich so eine höhere Gesamtleistung erzielen lässt. Für gewöhnlich besteht dabei die Brennstoffzelle aus zwei Elektroden, die durch eine Membran oder einen Ionenleiter voneinander getrennt sind. Die Anode wird mit dem Brennstoff umspült, welcher dort oxidiert wird. Die oxidierten positiv geladenen Ionen wandern durch eine Elektrolytmembran auf die Kathodenseite, wo sie sich mit dem reduzierten Oxidationsmittel, wie z.B. Luft, rekombinieren und aus der Brennstoffzelle abgeführt werden.

Bei der Konstruktion moderner Brennstoffzellenstacks wird insbesondere darauf geachtet, die Größe und das Gewicht der Brennstoffzellenstacks zu reduzieren, so dass diese in Anwendungen eingesetzt werden können, wo vor allem die Miniaturisierung und das Gewicht im Vordergrund stehen. Dies sind z.B. tragbare Elektronikgeräte oder am Körper tragbare medizintechnische Geräte oder kleine Fluggeräte.

In der US 6 986 961 B1 wird ein Brennstoffzellenstack beschrieben, welcher aus einzelnen Brennstoffzellen aufgebaut ist, die dem klassischen Aufbau mit Bipolarplatten, bei welchem sich Anode und Kathode abwechseln, folgen. In diesem Aufbau fließt der Strom senkrecht durch den Stack, so dass alle Bestandteile elektrisch leitfähig sein müssen. Dies wird durch Wellbleche gelöst, die in einem Rahmen aus glasfaserverstärktem Plastik eingebettet sind und anodenseitig mit einem Dichtungsrahmen abgedichtet werden. Obwohl die Herstellung mit Wellblech leichter ist als die Herstellung mit konventionellen Bipolarplatten, besitzt ein derartiger Brennstoffzellenstack immer noch ein hohes Gewicht aufgrund der Edelstahlwellbleche, der hohen Anzahl von Komponenten und dem hohen Dichtungsaufwand sowie dem durch das Wellblech relativ fest vorgegebenen Verhältnis von Höhe zum Abstand der Wellen. Dadurch werden die Belüftungseigenschaften der Separatoren beschränkt.

Eine weitere Entwicklung stellen die so genannten Bi-Brennstoffzellen dar. Hier werden zwei voneinander elektrisch isolierte Zellen so kombiniert, dass eine aus diesen Zellen aufgebauter Brennstoffzellenstack in der Reihenfolge Kathode, Membran, Anode, Anode, Membran, Kathode oder Anode, Membran, Kathode, Kathode, Membran, Anode aufgebaut ist. In der US 2005/0 026 021 A1 wird ein Stack in der Bi-Brennstoffzellenbauart beschrieben, welcher die Gewichtsersparnis aufgrund der Bi-Brennstoffzellenbauart aufgrund massiver Separatorenstrukturen und der Immission im Brennstoff wieder verliert. Des Weiteren wird durch die Bauart der Separatorenstruktur keine zufrieden stellende passive Belüftung und zufrieden stellender Abtransport der Reaktanden ermöglicht.

Aus der US 2006/0269821 Al ist eine Direkt-Methanol-Brennstoffzelle bekannt, bei der ein zentrales Brennstoffkanalsystem beidseitig von den Anoden umgeben ist, die wiederum jeweils einer Kathodenanordnung und den entsprechenden Luftkanalsystem gegenüber liegen. Die Luft für die Kathoden wird von einer offenen Seite her in die entsprechende Kanalstruktur eingeblasen. Der Brennstoff wird in Zufuhr- und Abführkanälen im Randbereich der Separatoren parallel zur Stapelachse geführt. Die Stromkollektoren sind als Lochfolien ausgebildet, wobei eine mittlere Metallfolie im nicht-aktiven Kontaktbereich der Elektroden von elektrisch isolierenden Kunststoffschichten umgeben ist. Die einzelnen Stromkollektorbereiche weisen zusätzliche Kontaktbereiche auf, die eine interne Verschaltung der Zellen ermöglichen, wohingegen überstehende Ableitfahnen den Stromabgriff von außen gewährleisten.

In der US 6503650 wird ein Brennstoffzellensystem offenbart, dass eine Membran-Elektroden-Einheit beinhaltet, die zwischen kathodenseitigem und anodenseitigem Separator mittels einer Rahmenkonstruktion aus Kunststoff fixiert wird. Die Zufuhr von Luft erfolgt mittels optionaler Gebläse. Der Brennstoff wird über einen Randbereich der Rahmenkonstruktion entlang der Stapelachse zugeführt. Die Separatoren bestehen aus jeweils einer ebenen Platte, von der aus sich in Querrichtung Kanalstege erheben.

Die US 2006/216568 offenbart einen zylinderförmigen Brenstoffzellenstapel aus Bi-Brennstoffzellen, wobei Methanol über eine zentrale Verbindungsachse zugeführt wird. Die Luft strömt von außerhalb des Stapels an die offenen Kathoden heran. Die Elektroden werden von außen kontaktiert und seriell verschaltet.

Die der Erfindung zugrunde liegende Aufgabe ist es daher, einen Brennstoffzellenstack in Leichtbauweise herzustellen, bei welchem ein möglichst geringes Gewicht vorliegt und bei welchem die Separatorenstrukturen so aufgebaut sind, dass sie eine gute passive Belüftung der Brennstoffzellen ermöglichen und gleichzeitig ein guter Abtransport der Reaktanden geschehen kann.

Diese Aufgabe wird erfindungsgemäß durch einen Brennstoffzellenstack nach Anspruch 1 gelöst. Vorteilhafte Weiterbildungen des Brennstoffzellenstacks sind in den abhängigen Ansprüchen beschrieben.

Der Brennstoffzellenstack besteht hierbei aus mindestens einer Brennstoffzelle und mindestens zwei Separatorenstrukturen, wobei jeweils eine Separatorstruktur auf jeweils einer der beiden sich gegenüberliegenden Seiten der Brennstoffzelle angeordnet ist. Der Aufbau einer Brennstoffzelle ist durch eine Abfolge Anodenstromableiter, Membranelektrodeneinheit und Kathodenstromableiter gegeben. An die der Membranelektrodeneinheit abgewandten Seite des Kathodenstromableiters schließt sich eine Separatorstruktur an, welche dazu dient, ein Oxidationsmittel, wie z.B. Luft, an die Kathode zu führen, wobei die erfindungsgemäße Separatorstruktur sich dadurch auszeichnet, dass sie auf mindestens einer Seite zur Umgebung hin geöffnet ist, um so passiven Luftaustausch der Brennstoffzelle mit ihrer Umgebung zu ermöglichen. Des Weiteren weist die Separatorstruktur in ihrem Randbereich ein geschlossenes Kanalsystem für Brennstoff auf, in dem Sinne, dass der Bereich des Separators zum passiven Luftaustausch und das Kanalsystem voneinander getrennt ausgeführt sind. Des Weiteren kann über die Separatorstruktur der Anpressdruck für den Betrieb der Brennstoffzelle übertragen werden.

Vorteilhafte Weiterbildungen des Brennstoffzellenstacks sind in den abhängigen Ansprüchen beschrieben.

Erfindungsgemäß wird eine Bi-Brennstoffzellen als Brennstoffzelle verwendet. Eine Bi-Brennstoffzelle besitzt hierbei mindestens eine Anode bzw. Kathode und mindestens zwei Membranelektrodeneinheiten sowie zwei Kathoden bzw. Anoden. Die Reihenfolge ist derart, dass in einem Querschnitt von links nach rechts betrachtet ein Kathodenstromableiter, eine Membranelektroneneinheit, ein Anodenstromableiter, eine Membranelektrodeneinheit und ein Kathodenstromableiter die Mindestelemente einer Bi-Brennstoffzelle beschreiben. Dadurch werden in einer Bi-Brennstoffzelle zwei elektrische Zellen gebildet, welche zumindest in Teilen durch den Anodenstromableiter getrennt werden. Bei der Verwendung von Bi-Brennstoffzellen wird jeweils eine Separatorstruktur auf einer der beiden sich gegenüberliegenden Seiten der Bi-Brennstoffzelle angeordnet. Der Vorteil des hier beschriebenen Brennstoffzellenstacks liegt darin, dass aufgrund der Bi-Brennstoffzellenbauweise Gewicht eingespart wird und gleichzeitig über die Separatorenstruktur ein passiver Luftaustausch mit der Umgebung stattfinden kann, so dass sich eine weitere Einsparung von Bauelementen ergibt.

Eine vorteilhafte Weiterbildung der Erfindung ist es, dass die Brennstoffzelle einen geschlossenen Anodenbereich aufweist. Dabei ist der Anodenbereich mit Dichtungen zur Umgebung hin abgeschlossen. Dies bedeutet, dass der Anodenstromableiter oder die Membranelektrodeneinheiten Dichtungen aufweisen, so dass sich zwischen der mindestens einen Membranelektrodeneinheiten einer einzelnen Brennstoffzelle, bzw. den beiden Membranelektrodeneinheiten einer Bi-Brennstoffzelle, ein geschlossener Bereich ergibt. Im Falle der Verwendung von Bi-Brennstoffzellen besteht der Vorteil darin, dass eine Brennstoffverteilungsstruktur gleich für zwei angrenzende Anoden genutzt werden kann und sich somit die Anzahl der Anschlüsse halbiert und sich auch der Druckabfall reduziert und der Brennstoff auf den schmalen Bereich zwischen den Membranelektrodeneinheiten beschränkt wird. Bei der Verwendung normaler Brennstoffzellen wird zuletztgenannter Vorteil ausgenutzt. Dadurch ergibt sich eine weitere Gewichtsersparnis. Dies ist des Weiteren vorteilhaft, da so die einzelne Brennstoffzelle vor dem Einbau in den Brennstoffzellenstack einzeln auf ihre Funktionstüchtigkeit hin geprüft werden kann. Dadurch wird vermieden, dass erst durch die Gesamtanordnung des Brennstoffzellenstacks eine Überprüfung der Funktionsweise des Brennstoffzellenstacks möglich wird. Dadurch ergibt sich ein weiterer Vorteil bei einer etwaigen Fehleranalyse.

Erfindungsgemäß weist die Brennstoffzelle einen nichtaktiven Randbereich auf. Dies bedeutet, dass die Brennstoffzelle einen Bereich aufweist, welcher nicht durch die Membranelektrodeneinheiten überdeckt ist. Folglich kann in diesem Bereich keine Energiegewinnung erfolgen, da in diesen Bereich sowohl Elektronen als auch Ionen geleitet werden.

In Verbindung mit der vorteilhaften Weiterbildung, dass die Brennstoffzelle einen geschlossenen Anodenbereich aufweist, findet in diesem nichtaktiven Bereich weder ein Elektronenaustausch noch ein Ionenaustausch zwischen der Anoden- und Kathodenseite statt.

Des Weiteren erfindungsgemäß weist der Randbereich, welcher den nichtaktiven Bereich bildet, im Vergleich mit dem aktiven Bereich, eine zusätzliche bzw. verstärkte Metallisierung auf. Die verstärkte Metallisierung ist auf die Brennstoffverteilerschicht (1) aufgebracht und ragt zur Kühlung der Brennstoffzelle (1) über die Separatorstruktur hinaus. Der Vorteil der zusätzlichen Metallisierung in Verbindung mit dem nichtaktiven Randbereich besteht darin, dass der ohmsche Widerstand der Stromableiter reduziert wird und gleichzeitig eine Kühlung der Brennstoffzellen möglich ist. Durch eine derartige Kühlung der Brennstoffzelle lässt sich eine höhere Leistungsdichte, und damit eine leichtere Bauform des Brennstoffzellenstacks erreichen.

Die zu-sätzliche Metallisierung überragt die Separatorstruktur. Dadurch übernimmt die Metallisierung zusätzlich eine Kühlung der Brennstoffzelle und wirkt wie eine Kühlrippenanordnung. Die Kühlrippen können beispielsweise im mittleren Bereich der Brennstoffzelle weiter über der Separatorstruktur hinausragen, da die Brennstoffzelle in der Mitte am wärmsten ist und somit eine gleichmäßige Temperaturverteilung innerhalb der Brennstoffzelle ermöglicht wird.

Erfindungsgemäß weist die Bi-Brennstoffzelle eine feste mindestens einschichtige Brennstoffverteilerstruktur auf, wobei mindestens eine Schicht als Anodenstromableiter ausgebildet ist. Der Vorteil einer Brennstoffverteilerstruktur liegt darin, dass der Brennstoff besser über die gesamte Anode verteilt werden kann.

Eine weitere vorteilhafte Weiterbildung der Erfindung ist es, wenn die Brennstoffverteilerstruktur auf mindestens einer Seite in Querrichtung ein Mikroflowfield mit Vertiefungen oder Erhebungen zum besseren Verteilen des Brennstoffs aufweist. Der Vorteil besteht darin, dass zusätzlich zu einer groben Verteilung des Brennstoffs auf den aktiven Bereich mit Hilfe der Mikroflowfields eine sehr viel feinere Verteilung des Brennstoffs erreicht werden kann. Hierbei ist es insbesondere vorteilhaft, wenn die Brennstoffverteilerschicht über ein getrenntes Brennstoffeinlauf- und Brennstoffauslaufsystem verfügt. Im Falle einer Bi-Brennstoffzelle wird für jede elektrische Zelle jeweils ein Mikroflowfield auf beiden Seiten der Brennstoffverteilerstruktur aufgebracht.

Eine weitere vorteilhafte Weiterbildung ist es, wenn das Mikroflowfield getrennte Brennstoffeinlass- und Brennstoffauslassöffnungen besitzen, da so eine bessere Zirkulierung des Brennstoffs erreicht wird.

Eine weitere vorteilhafte Weiterbildung der Erfindung ist es, wenn die Kathodenstromableiter Öffnungen mit einem großen Öffnungsverhältnis aufweisen. Dadurch wird mit Hilfe der Separatorenstruktur eine ausreichende Versorgung der Kathode mit Luft gewährleistet. Als Öffnungen bilden sich Quadrate oder Kreise an, so dass der Kathodenstromableiter als zusammenhängende Fläche mit großen Löchern ausgebildet ist. Besonders vorteilhaft ist die Ausbildung als regelmäßiges Gitter. Es ist möglich, die Kathodenstromableiter als Folie auszubilden und mehrere der gitterförmigen Kathodenstromableiter übereinander geschichtet auf die Membranelektrodeneinheit aufzubringen. Der Vorteil dieser Anordnung besteht darin, dass eine weitere Gewichtsersparnis durch die gitterförmige Anordnung und die Folienbauweise erreicht werden kann. Des Weiteren ist es vorteilhaft, wenn die Kathodenstromableitergitter aus einem porösen Werkstoff hergestellt sind, um so eine maximale Reaktionsfläche für die Reduktion des Oxidationsmittels zu erreichen.

Eine weitere vorteilhafte Weiterbildung der Erfindung ist es, dass die Separatorstruktur eine Trägerstruktur aufweist und in Querrichtung zu dieser Trägerstruktur auf mindestens einer Seite weitere zusätzliche Elemente besitzt. Hierbei werden die Kanäle der Separatorstruktur zumindest in Teilen durch den Zwischenraum der zusätzlichen Elemente zueinander gebildet. Der Vorteil besteht darin, dass unter geringem Materialaufwand eine Separatorstruktur hergestellt wird, welche über das Anordnen der zusätzlichen Elemente ein großes Öffnungsverhältnis der Kanäle zum Zuführen eines Oxidationsmittels und zum Abführen von rekombinierten Ionenprodukten aufweisen kann. Hierbei kann durch die Anordnung der zusätzlichen Elemente, abhängig vom Brennstoff und vom Oxidationsmittel, eine Luftzufuhr mit natürlicher Konvektion erlangt werden. Es ist auch möglich, dass ein Lüfter mit nur geringem Druckabfall Luft in die Kanäle mit großer Öffnung einbläst. Der Lüfter benötigt dabei nur eine kleine Leistung.

Um einen vorteilhaften Aufbau des Brennstoffzellenstacks zu ermöglichen, ist es weiterhin vorteilhaft, dass die Separatorstruktur in beide Querrichtungen der Trägerstruktur zusätzliche Elemente aufweist. Dadurch ergibt sich eine Abfolge Separator, Brennstoffzelle, Separator, Brennstoffzelle, Separator. Im Falle von Bi-Brennstoffzellen können sich zwei zu verschiedenen Bi-Brennstoffzellen gehörende Kathoden, welche nur durch eine Separatorstruktur getrennt werden, eine einzige luftzuführende Separatorstruktur teilen, was eine zusätzliche Gewichtsersparnis zur Folge hat.

Ein zusätzlicher Vorteil ergibt sich dadurch, wenn die Trägerstruktur der Separatorstruktur zumindest teilweise als Gitter oder als Streben mit davon abstehenden Streben ausgebildet wird, da hierdurch eine weitere Gewichtsersparnis erreicht werden kann.

Eine weitere vorteilhafte Weiterbildung der Erfindung ist es, wenn die zusätzlichen Elemente der Trägerstruktur der Separatorstruktur als Platten oder Säulen oder Zapfen ausgebildet sind. Der Vorteil ergibt sich dadurch, dass verschiedene Kanalgeometrien realisiert werden können. So können beispielsweise durch Platten mäanderförmige Luftkanäle erzeugt werden oder durch Säulen oder Zapfen ein sehr großer Luftzuführungsbereich realisiert werden. Dies verbessert die Zuführung eines Oxidationsmittels durch passiven Luftaustausch.

Eine weitere vorteilhafte Weiterbildung der Erfindung ist es, wenn die Abstände der zusätzlichen Elemente der Separatorstruktur zueinander im Wesentlichen gleich den Abständen der Gitterpunkte der Kathode zueinander sind. Der Vorteil liegt darin, dass die Endpunkte der zusätzlichen Elemente bei der Montage so auf die Kreuzungspunkte des Kathodenstromableitergitters gelegt werden, da sich dadurch der für den Betrieb der Brennstoffzelle, bzw. der Bi-Brennstoffzelle, notwendige Anpressdruck allein aufgrund des Andrückens der Separatorstruktur realisieren lässt. Eine derartige Separatorstruktur kann also durch gewichtsparende Weise eine verbesserte Luftzufuhr und einen geeigneten Anpressdruck für den Betrieb der Brennstoffzelle herstellen. Hierbei ist es vorteilhaft, wenn die Separatorstruktur druckstabil gefertigt ist, so dass ausreichend hohe Anpressdrücke erreicht werden können. Dabei besitzt die Separatorstruktur eine mechanische Mindeststeifigkeit, welche durch die Materialeigenschaften und die Konstruktion gegeben ist, so dass Anpressdrücke von bis zu 100 N/c^2, typischerweise zwischen 10 N/cm^2 bis 50 N/cm^2, zwischen einzelnen Brennstoffzellen übertragen werden können ohne das einzelne zusätzliche Elemente der Separatorstruktur beschädigt werden oder abknicken, oder die Trägerstruktur zerstört wird.

Als geeignete vorteilhafte Werkstoffe für die Separatorstruktur sind vorteilhafterweise Kunststoffe oder harzgetränkte Kunststoffgewirke, sowie mit Glasfasern oder Kohlefasern oder Nanotubes verstärkte Verbundwerkstoffe zu benutzen. Es kann auch vorteilhaft sein, auf einer aus Kunststoff hergestellte Trägerstruktur die zusätzlichen Elemente durch speziell geformte Wellbleche auszubilden.

Eine weitere vorteilhafte Weiterbildung der Erfindung ist es, dass die Separatorstruktur im Randbereich zusätzliche elektrische Kontaktierungen aufweist. Hierbei ist es weiterhin vorteilhaft, wenn die Kontaktierungen durch den Randbereich der Separatorstruktur über elektrische Zuleitungen verbunden werden. Auf diese Weise kann die elektrische Energie, welche in der Brennstoffzelle bzw. in den einzelnen Brennstoffzellen der Bi-Brennstoffzelle erzeugt wird, über den Randbereich der Brennstoffzelle und den Randbereich der Separatorstruktur nach außen geleitet werden, wo er von verschiedensten elektrischen Applikationen verwendet werden kann.

Eine weitere vorteilhafte Weiterbildung der Erfindung ist es, die Separatorstruktur als Randelement auszubilden. Hierbei ist es sinnvoll, die Trägerstruktur als geschlossene Platte auszuführen, so dass der Separator als Teil eines Gehäuses dienen kann, und verschiedene Punkte existieren, um den Anpressdruck über die Randelemente und die Separatorstrukturen auf alle im Brennstoffzellenstack vorhandenen Brennstoffzellen zu übertragen.

Eine weitere vorteilhafte Weiterbildung der Erfindung ist es, wenn alle Komponenten der Brennstoffzelle aus Kunststoff oder Kunststoffverbundwerkstoffen oder Kunststoffen mit dünnen Metallisierungen hergestellt sind. Durch die Verwendung von leichten Kunststoffmaterialien ergibt sich eine weitere Gewichtsersparnis.

Eine vorteilhafte Weiterbildung des Brennstoffzellenstacks ist es, wenn die einzelnen Brennstoffzellen als Brennstoff Wasserstoff oder Methanol oder Ethanol verwenden.

Des Weiteren ist es eine vorteilhafte Weiterbildung, wenn das Volumen des Brennstoffzellenstacks zwischen 1 cm³ und 500 cm³ liegt.

Eine weitere vorteilhafte Weiterbildung der Erfindung ist es, dass die elektrischen Zellen der Bi-Brennstoffzellen bzw. die einzelnen Bi-Brennstoffzellen untereinander in Reihe oder parallel geschaltet sind. Für den Fall, dass die Einzelzellen parallel geschaltet werden, kann der Aufbau der Bi-Brennstoffzelle fast vollständig aus elektrisch leitfähigem Material hergestellt werden. Dabei werden die beiden Anoden und die beiden Kathoden der elektrischen Einzelzellen der Bi-Brennstoffzelle über Stromableiter verbunden. Die einzige Isolation besteht also zwischen der Anode und der Kathode, und wird jeweils durch die elektrisch isolierende Membran der Membranelektrodeneinheit realisiert. Bei einer Schaltung der elektrischen Zellen in Reihe müssen die beiden elektrischen Zellen weitgehend voneinander isoliert sein. Dies bedeutet, dass mindestens eine Schicht der Brennstoffverteilerstruktur isolierend ausgeführt sein muss. Der Vorteil ergibt sich daraus, dass durch die unterschiedlichen Verschaltungsweisen der Brennstoffzellenstack den Bedürfnissen der an ihm angeschlossenen Applikation angepasst werden kann. Im Falle der Verwendung einfacher Brennstoffzellen kann analog dazu verfahren werden.

Durch das Zusammenschalten mehrerer Brennstoffzellenstacks kann leicht eine hohe Gesamtbatteriespannung erzeugt oder eine robuste Gesamtanordnung hergestellt werden. Die durch die Brennstoffzelle zu betreibende Applikation bestimmt hierbei ob eine Reihenschaltung oder eine Parallelschaltung oder eine Kombination von beiden Schaltungen am sinnvollsten ist.

Ein erfindungsgemäßer Brennstoffzellenstack kann insbesondere dort eingesetzt werden, wo eine leichte zuverlässige Stromversorgung notwendig ist, wie dies beispielsweise für Fluggeräte, wie einer Drohne oder im Modellbau, nötig ist. Hierbei kann die Brennstoffzellenstackanordnung sowohl als Antriebsspannung zum Betrieb eines Motors als auch als Betriebsspannung für im Fluggerät verwendete Geräte oder Schaltkreise verwendet werden.

Auch tragbare Geräte wie Laptops oder Mobiltelefone, bzw. am oder im Körper getragene medizinische Geräte können mit einem hier beschriebenen Brennstoffzellenstack betrieben werden.

Weitere vorteilhafte Weiterbildungen der Erfindung sind in den nebengeordneten Ansprüchen der Erfindung beschrieben.

Weitere Merkmale und Vorteile der Erfindung werden bei der nachfolgenden Beschreibung eines Brennstoffzellenstacks mit Bi-Brennstoffzellen anhand der Figuren deutlich. Es zeigen:
- Fign. 1a 1b, 1c: Aufbau von Brennstoffzellenstacks aus Bi-Brennstoffzellen und Separatorstrukturen mit Randelementen,
- Fign. 2a und 2b: Aufbau einer Bi-Brennstoffzelle,
- Fign. 3a und 3b: Aufbau der Brennstoffverteilerschicht der Bi-Brennstoffzelle,
- Fign. 4a und 4b: Aufbau der Mikroflowfields in der Bi-Brennstoffzelle,
- Fign. 5a und 5b: Metallisierungen der Randbereiche der Bi-Brennstoffzelle,
- Fig. 6: Aufbau eines Kathodenstromableiters,
- Fign. 7a bis 7g: Aufbau und Ausführungsformen der Separatorstruktur,
- Fign. 8a bis 8d: Verschaltung der Bi-Brennstoffzellen in Reihe,
- Fign. 9a bis 9c: Verschaltung der Bi-Brennstoffzellen parallel.

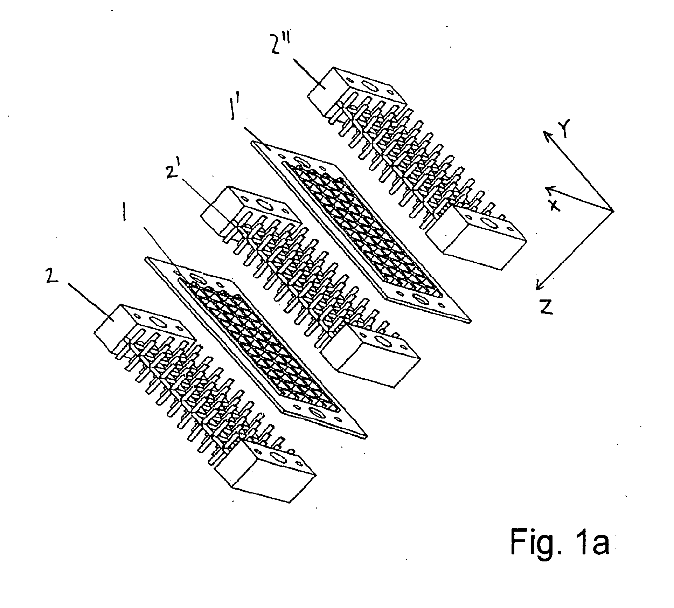

In Fig. 1a wird die prinzipielle Aufbauweise eines Brennstoffzellenstacks mit Bi-Brennstoffzellen und erfindungsgemäßer Separatorstruktur erläutert. Die Bi-Brennstoffzellen 1, 1' weisen - jede für sich genommen - zwei elektrische Zellen auf. Zwischen den beiden Bi-Brennstoffzellen 1, 1' befindet sich eine Separatorstruktur 2', welche die rechte Brennstoffzelle der Bi-Brennstoffzelle 1 von der nicht sichtbaren linken Brennstoffzelle der Bi-Brennstoffzelle 1' separiert. In der Stackbauweise werden die Bi-Brennstoffzellen 1, 1' zwischen Separatoren 2, 2', 2" angeordnet und um weitere Bi-Brennstoffzellen und Separatorenstrukturen links und rechts der Elemente 2 und 2" ergänzt.

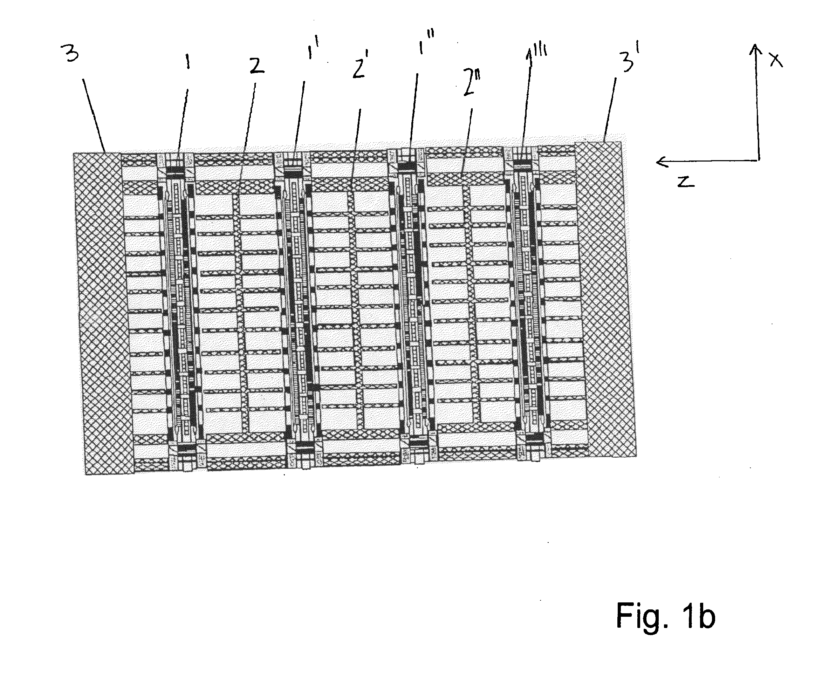

In Fig. 1b ist ein ähnlicher Stack in der X-Z-Ebene dargestellt. In dem Stack befinden sich vier Bi-Brennstoffzellen 1, 1', 1", 1''', welche jeweils links und rechts durch Separatorenstrukturen eingebettet werden. Hierbei sind die am linken Rand und am rechten Rand ausgeführten Separatorenstrukturen als Randelemente 3, 3' ausgebildet, über welche der Anpressdruck für die Bi-Brennstoffzellen 1, 1', 1", 1"' erzeugt wird. Dabei wird der Anpressdruck über die Separatorenstrukturen 2, 2', 2" an die jeweils nächstgelegene Bi-Brennstoffzelle weitervermittelt. Der Vorteil der Stackbauweise liegt darin, dass der Anpressdruck gleichzeitig für eine Vielzahl von Brennstoffzellen aufgebracht werden kann. Zugleich wird eine weitere Gewichtsersparnis dadurch erreicht, dass Bi-Brennstoffzellen 1, 1', 1", 1"' benutzt werden, welche den Materialverbrauch weiter reduzieren. In den Zwischenräumen der Separatorstrukturen 2, 2', 2" bzw. der Randelemente 3, 3' befindet sich kein Brennstoff, sondern diese dienen unter anderem dazu, eine passive Luftversorgung der Brennstoffzellen zu gewährleisten. Dies wird auch aus Fig. la offensichtlich im welcher gezeigt ist, dass die Separatorenstrukturen 2, 2', 2" zu beiden Seiten in X-Richtung hin offen sind, was einen passiven Luftaustausch mit der Umgebung ermöglicht. Auf weitere hier eingezeichnete Merkmale der Separatorstruktur und der Bi-Brennstoffzellen wird in den weiteren Figuren eingegangen.

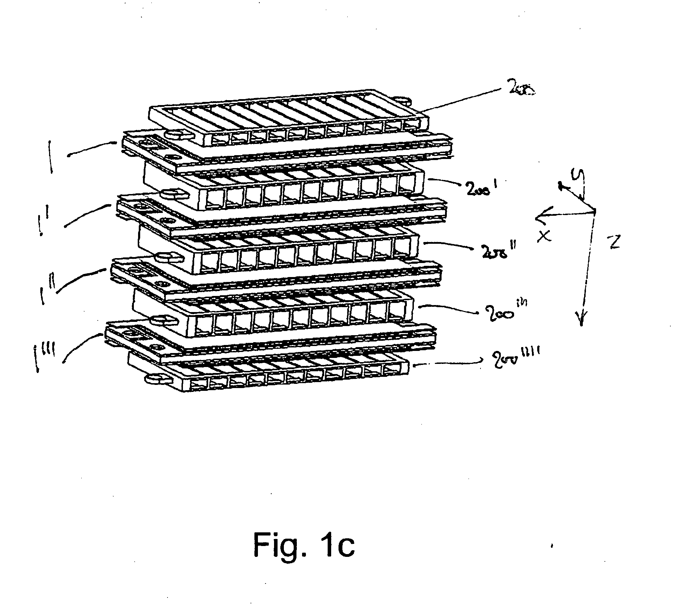

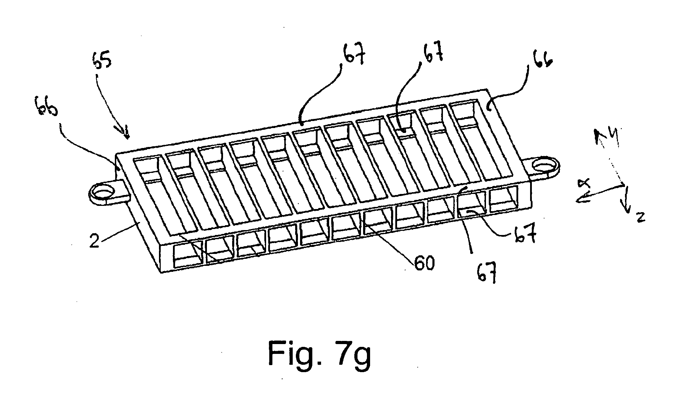

In Fig. 1c ist eine ähnliche Ausführungsform dargestellt, wobei zur Übersichtlichkeit keine Endplatten vorhanden sind. In einer realen Ausführung sind die Endplatten vorhanden. Der Brennstoffzellenstack weist eine Vielzahl von Bi-Brennstoffzellen 1, 1', 1", 1''' auf, wobei die Bi-Brennstoffzellen durch jeweils eine Separatorstruktur 200', 200" , 200''' voneinander beabstandet sind. Der eingezeichnete Abstand zwischen den Bi-Brennstoffzellen und den Separatorstrukturen ist lediglich zur besseren Übersichtlichkeit vorhanden: Im Betriebszustand liegen die Separatorstrukturen derart auf den Bi-Brennstoffzellen, dass der umlaufende Rahmen der Separatorstruktur im äußeren, nicht aktiven Bereich der Brennstoffzelle liegt, in welchem sich auch die Dichtung der jeweiligen MEA der Bi-Brennstoffzelle befindet. Auf diese Weise kann ein gleichmäßiger Anpressdruck auf die Dichtungen ausgeübt werden. Die Separatorstrukturen 200, 200'''' weisen in z-Richtung einen kleineren Querschnitt auf, da nur eine Brennstoffzelle versorgt werden muss, während die Separatorstrukturen 200', 200", 200'" jeweils in z-Richtung oben und unten eine Brennstoffzelle versorgen müssen. Auf die Separatorstruktur 200' bzw. 200 wird in der Fig. 7g genauer eingegangen.

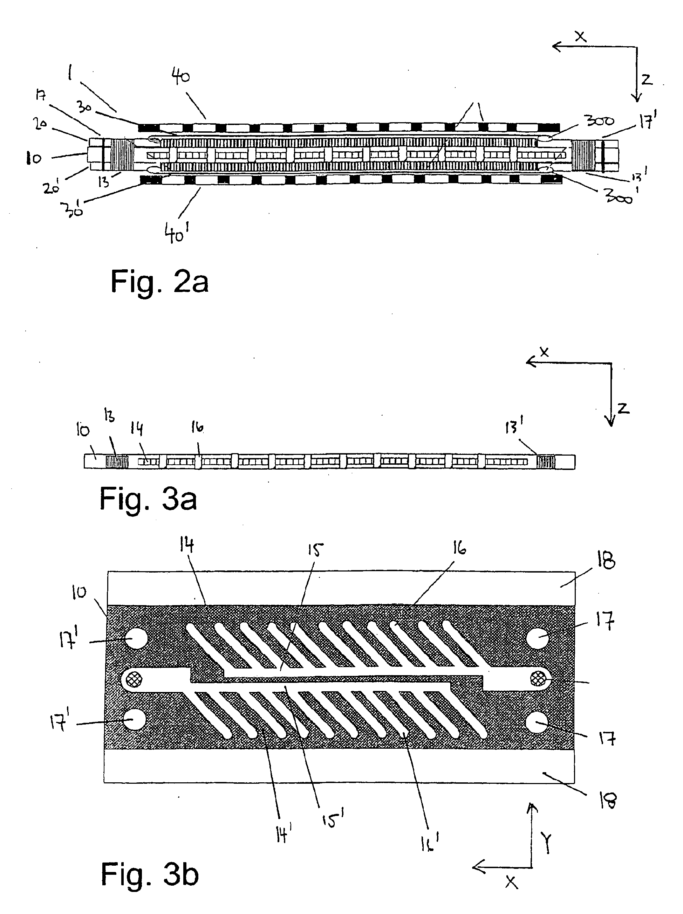

In Fig. 2a wird der hier verwendete Aufbau einer Bi-Brennstoffzelle dargestellt. Die Bi-Brennstoffzelle besteht hierbei aus einer mittleren Brennstoffverteilerschicht 10 auf welche in Z-Richtung auf beiden Seiten jeweils ein Mikroflowfield 20, 20' aufgebracht ist. An das Mikroflowfield 20 bzw. 20' anschließend befindet sich die Membranelektrodeneinheit (MEA) 30 bzw. 30', wobei die MEA 30 und die MEA 30' über Dichtungen 300 und 300' so mit den Mikroflowfields 20 und 20' verbunden werden, dass ein geschlossener Innenraum zwischen den beiden MEAs 30, 30' entsteht. Da eine der Schichten 10, 20, 20' als Anodenstromableiter ausgebildet ist, ist der Anodenraum somit geschlossen ausgeführt. Jeweils an die MEA 30 bzw. 30' schließt sich ein Kathodenstromableiter 40, 40' an. Die MEAs 30, 30' können auf den Elektrodenschichten von Anode und Kathode zusätzliche Gasdiffusionslagen besitzen, die in Fig. 2a jedoch nicht eingezeichnet sind. Des Weiteren weist die Bi-Brennstoffzelle 1 sowohl Öffnungen 13, 13' für den Brennstoffeinfluss und den Brennstoffabfluss auf, als auch Löcher 17, 17', welche mit einem elektrischen Leiter zur elektrischen Kontaktierung verschiedener Zellen ausgebildet sein können. Aus der Aufbauweise der Bi-Brennstoffzelle 1 in Fig. 2a ist deutlich zu erkennen, dass zwei getrennte elektrische Zellen vorhanden sind, wobei die Brennstoffverteilerschicht 10, sowohl die elektrische Zelle bestehend aus den Elementen 20, 30, 40 und die elektrische Zelle bestehend aus den Elementen 20', 30', 40' mit Brennstoff versorgt. Ein Merkmal der Bi-Brennstoffzelle ist es, dass nahezu alle Lagen, d.h. die Brennstoffverteilerschicht, die Mikroflowfields 20, 20' und die Kathodenstromableiter 40, 40' aus Kunststoff bzw. metallisch beschichtetem Kunststoff oder Kunststoffgewebe hergestellt werden können. Um die Bi-Brennstoffzelle in einer sehr dünnen Ausführung realisieren zu können ist es sinnvoll, die Mikroflowfields 20, 20' als auch die Kathodenstromableiter 40, 40' in Folienbauweise zu erstellen. Unabhängig von der hier gezeigten Struktur der Bi-Brennstoffzelle 1 sind einige der eingezeichneten Merkmale in Fig. 2a nicht zwingend notwendig für den Betrieb einer solchen Bi-Brennstoffzelle.

Es ist möglich, auf die Mikroflowfields 20, 20' zu verzichten. Bei einem solchen Verzicht müssen Teile der Brennstoffverteilerschicht 10 als Anodenstromableiter ausgebildet werden, wobei es hier von der späteren Verschaltung abhängt, ob die Brennstoffverteilerschicht als Ganzes elektrisch leitend sein kann oder ob nur die oberen Schichten der Verteilerschicht 10 bzw. die unteren Schichten der Verteilerschicht 10 metallisiert werden und die eigentliche Brennstoffverteilerschicht isolierend ausgeführt ist. Der erste Fall ist gleichbedeutend damit, dass sich die beiden elektrischen Zellen der Bi-Brennstoffzelle einen Anodenstromableiter teilen. Der Anodenstromableiter wird hierbei als einziger Anodenstromableiter in der Brennstoffverteilerschicht 10 realisiert. Im zweiten Fall weisen die beiden elektrischen Zellen zwei voneinander isolierte Anodenstromableiter auf, wobei die Anodenstromableiter jeweils auf der Oberseite der Brennstoffverteilerschicht oder der Unterseite der Brennstoffverteilerschicht, wobei die Brennstoffverteilerschicht an sich isolierend ausgebildet ist, aufgefügt sind.

Für den Fall, dass die beiden elektrischen Zellen der Bi-Brennstoffzelle 1 einen gemeinsamen Anodenstromableiter aufweisen, können die zwei unterschiedlichen elektrischen Zellen der Bi-Brennstoffzelle 1 nicht in Reihe geschaltet werden.

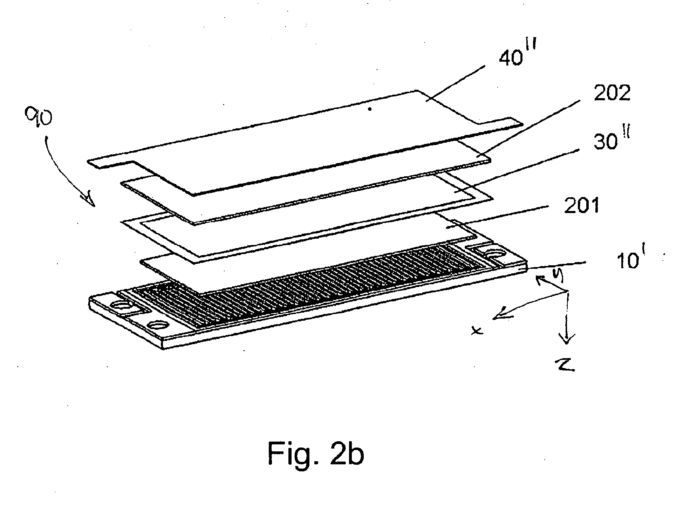

In der Fig. 2b ist ein alternativer Aufbau einer Brennstoffzelle 90 dargestellt. Die Brennstoffzelle 90 ist eine einfache Brennstoffzelle, kann jedoch durch Spiegelung der einzelnen Schichten auch den Aufbau einer Bi-Brennstoffzelle beschreiben. Die Brennstoffzelle 90 weist ein Anodenflowfield 10' auf, welches aus einem metallisierten Kunststoff besteht. Die Metallisierung ist als Metallgitter aufgebracht. Alternativ kann das Anodenflowfield selbst elektrisch leitend ausgebildet sein. Zwischen dem Anodenflowfield 10' und der MEA 30" ist eine Gasdiffusionslage 201 angeordnet. Eine weitere Gasdiffusionslage 202 ist zwischen der MEA 30'' und dem Stromableitergitter 40" angeordnet. Die MEA 30" ist am Rand mit einer Dichtung oder Klebung abgedichtet, so dass ein gasdichter Anodenraum zwischen der MEA 30" und dem Anodenflowfield 10' entsteht.

Die Gasdiffusionslagen können alternativ zu einer feinen Strukturierung des Anodenflowfields 10 der Fig. 2a eingesetzt werden. Ebenso sind die Gasdiffusionslagen bei einer feinen (oder auch einer fehlenden) Strukturierung sinnvoll, wenn die Fläche der Brennstoffzelle in der xy-Ebene anwächst.

In den Fign. 3a und 3b wird die hier dargestellte Brennstoffverteilerschicht 10 näher erläutert. Die Brennstoffverteilerschicht 10 verfügt über Brennstoffeinfluss- und -ausflusslöcher 13, 13', eine Kanalstruktur 14, und schematisch eingezeichneten Kanälen 16.

In Fig. 3b ist die Kanalstruktur 14 dadurch gekennzeichnet, dass sie mit dem Einflussloch 13 über einen Hauptkanal 15 mit den Kanalarmen 16 verbunden ist. Eine analoge Struktur 13', 14', 15' und 16' ist für den Brennstoffausfluss verantwortlich. Die Löcher 17 sind ausgebildet zum Durchführen von elektrischen Kontaktierungen. Von besonderer Bedeutung sind auch die Abschnitte 18, welche jeweils über den aktiven Bereich der Bi-Brennstoffzelle hinausragen, um dort eine bessere laterale Stromableitung und Kühlung der Bi-Brennstoffzelle erzielen zu können.

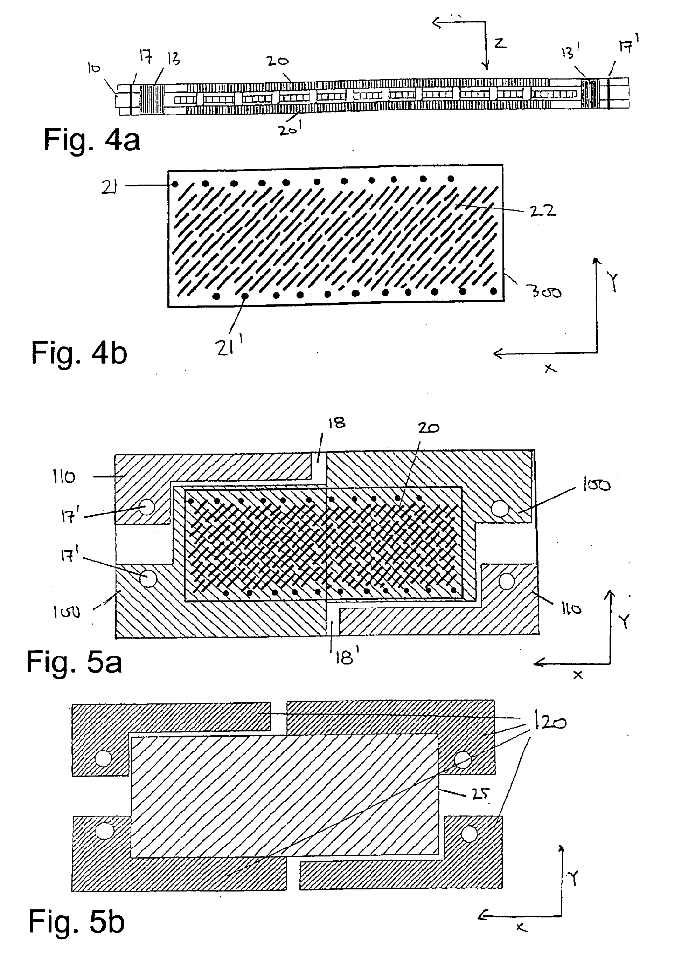

In Fig. 4a wird die Brennstoffverteilerschicht 10 jeweils in X-Richtung auf beiden Seiten mit einem Mikroflowfield 20 verbunden. Auch sind in den Mikroflowfields 20, 20' elektrische Kontaktierungen 17 vorhanden, welche sich mit den elektrischen Kontaktierungen 17 der Brennstoffverteilerschicht überdecken. Die Mikroflowfields 20, 20' können hierbei separat hergestellte Substrate oder Folien sein, die auf die Brennstoffverteilerschicht 10 aufgebracht werden. Sie können jedoch auch gleich bei der Herstellung der Brennstoffverteilerschicht 10 mit erzeugt werden. In einem einfachen Fall besteht die in Fig. 3 gezeigte Struktur aus Brennstoffverteilerschicht 10 und Mikroflowfields 20, 20' nur aus zwei gasdicht miteinander verbundenen Substraten: Eines, welches die Brennstoffverteilerschicht innen und die Flowfields 20, 20' außen enthält, und eines mit glatter Innenseite und Flowfield 20 außen. Für den Fall, dass die Substrate aus einem Isolator hergestellt sind, so wird ganzflächig auf den Flowfields eine Metallisierung zur Stromableitung aufgebracht. Dies kann durch chemische Beschichtung, Sputtern oder Sputtern und Galvanik erfolgen. Korrosionsstabile Schichten sind beispielsweise Ag, oder TiW-Au, NiCr-Au. Als Stromableitungen sind des Weiteren dünne Stahl- oder Aluminiumfolien denkbar, die mit einer elektrisch leitfähigen organischen Schutzschicht versehen sind.

Fig. 4b ist ein einzelnes Mikroflowfield 20 in der XY-Ebene dargestellt. Das Mikroflowfield wird derart auf der Brennstoffverteilerschicht 10 angebracht, so dass die Löcher 21 mit den Endpunkten der Kanäle 16 der Brennstoffverteilerstruktur zusammenfallen. D.h., der Brennstoff der durch das Loch 13 in die Brennstoffverteilerschicht eintritt und über das Kanalsystem 15 und 16 transportiert wird, tritt an den Mikroflowfields durch die Löcher 21 aus. Dabei wird die Flowfieldstruktur durch Stege 22 realisiert, die in einem bestimmten Winkel zur Brennstoffverteilerstruktur 10 angeordnet sind. Für die Elemente 22 sind aber auch andere Strukturen möglich, wie z.B. Mäander, die die oberen Öffnungen 21 mit den unteren Öffnungen 21' verbinden. Des Weiteren ist am Rand eine Dichtung 300 sichtbar, welche zur Abdichtung des Anodenraums durch die Membranelektrodeneinheit 40 dient.

In Fig. 5 wird die Metallisierung eines Anodenstromableiters, wie sie hier durch das Flowfield 20 realisiert wird, dargestellt. Die Metallfläche 100 deckt den gesamten aktiven Bereich einer der elektrischen Zellen der Bi-Brennstoffzelle ab, wobei der aktive Bereich 25 der Brennstoffzelle in Fig. 5 durch die durch das Mikroflowfield 20 mit der Dichtung 300 abgedeckten Fläche gebildet wird. Weiterhin wird die Metallisierung in die Bereiche 18 und 18' der Brennstoffverteilerstruktur hin verbreitet. Die Metallfläche 100 stellt den Minuspol dar. Zusätzlich zu den Metallisierungsbereichen 100 werden zwei weitere Metallisierungen 110 aufgebracht, welche vorteilhaft mit der später aufzubringenden Kathode verbunden sind. Vorteilhafterweise kann die Strukturierung der Metallflächen 100, 110 am einfachsten subtraktiv durch Laserablation erfolgen.

In Fig. 5b ist eine weitere verstärkte Metallisierung 120 aufgebracht, jedoch nur außerhalb des aktiven A-nodenbereichs 25. Durch die zusätzliche Metallisierung des Randbereichs lassen sich die ohmschen Verluste durch die Stromleitung zu den Stromabgriffen an den schmalen Seiten entlang der Y-Richtung der Metallisierung 120 verringern. Des Weiteren wird durch die zusätzliche Metallisierung 120 die Wärmeableitung der Bi-Brennstoffzelle verbessert. Hierdurch ist es möglich, die Bi-Brennstoffzelle mit einer höheren Leistungsdichte zu betreiben, was Einfluss auf die Brennstoffe hat, mit welchen die Bi-Brennstoffzelle betrieben werden kann. Da die zusätzliche Metallisierung 120 im nichtaktiven Bereich der Bi-Brennstoffzelle aufgebracht ist und durch die Dichtung 300 vom Anodenraum getrennt ist, können die Korrosionsprobleme, welche im aktiven Anodenraum auftreten, reduziert werden und für die Metallisierungen einfache Metalle, wie Kupfer, Aluminium oder Nickel verwendet werden. Die Schichten können hierbei durch chemische oder galvanische Verstärkung aufgebracht werden oder durch das Aufbringen von elektrisch leitfähigen Metallfolien in Verbindung mit elektrisch leitfähigen Klebern.

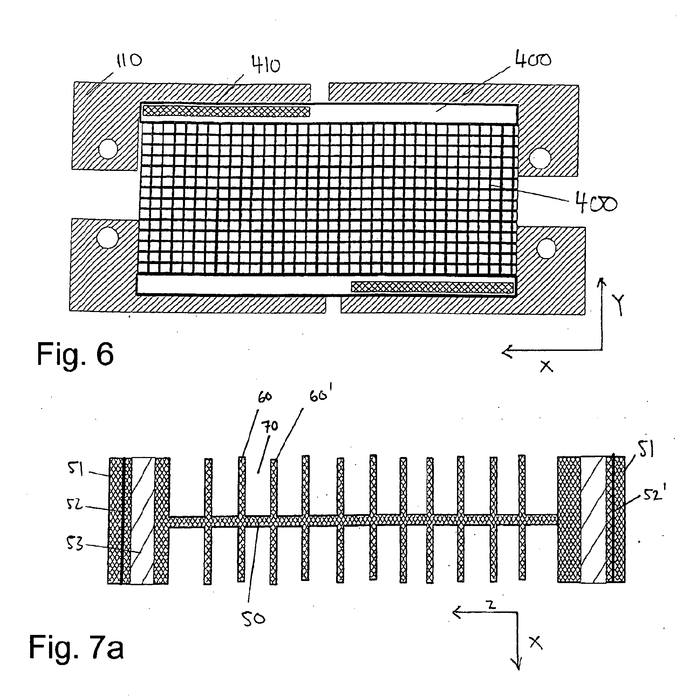

In Fig. 6 ist der Kathodenstromableiter 400 dargestellt. Dieser besteht aus einer gitterförmigen Struktur. Die gitterförmige Struktur besitzt ein möglichst großes Öffnungsverhältnis, so dass ungehindert Sauerstoff an die Kathode transportiert werden kann. Eine Weiterbildung der Stromableiter 40 bzw. 40' wird dadurch erreicht, dass mehrere Gitterstrukturen übereinander liegen, welche ein mechanisch stabiles und gleichzeitig an den Kathoden fein strukturiertes Gebilde bilden. Diese Weiterbildung wird zusätzlich dadurch verstärkt, dass die Gitterstruktur als eine poröse Gitterstruktur ausgebildet ist. Aufgrund der gitterförmigen Ausbildung der Stromableiterfolie kann der Anpressdruck gleichmäßig verteilt werden und die ohmschen Verluste minimiert werden. Vorteilhafterweise besteht die Metallisierung der Kathode aus den gleichen Materialien oder Schichten wie die der Anode. Durch eine derartige Ausbildung werden Korrosionsprobleme vermieden. Prinzipiell ist es aber auch möglich, unterschiedliche Materialien zu verwenden, gesetzt den Fall, dass deren Materialeigenschaften die Aufgabe der Kathode erfüllen können.

Analog zur Anodenseite befindet sich eine zusätzliche Metallisierung 400 am Stromableiter 40 der Kathode, welche außerhalb des aktiven Bereiches der Bi-Brennstoffzelle angeordnet ist. Dabei ist der aktive Bereich der Bi-Brennstoffzelle gleichzusetzen mit dem abgedichteten Bereich der Anodenseite.

Die verstärkte Metallisierung 400 hat ebenso wie die zusätzliche Metallisierung 120 auf der Anodenseite die Aufgabe die ohmschen Verluste zu minimieren und dadurch eine bessere Energieausbeute zu erreichen. Das ist dadurch notwendig, dass von jeder einzelnen Zelle der Strom erst lateral nach außen geleitet wird, und dort erst die Verschaltung mit den anderen Zellen des Brennstoffzellenstacks erfolgt. Normalerweise fließt der Strom senkrecht durch den Brennstoffzellenstack und hat dafür den gesamten Querschnitt des Brennstoffzellenstacks bzw. der Membran zur Verfügung.

Des Weiteren kann über den verstärkten Bereich 400 durch eine zusätzliche Kontaktfläche 410 eine Kontaktierung zu den Substratanschlüssen 110 hergestellt werden. Zur Herstellung der zusätzlichen Metallisierung können chemische oder galvanische Verstärkungen als auch elektrisch leitfähige Metallfolien verwendet werden.

Die in den Fign. 2, 3, 4, 5 und 6 dargestellte Bi-Brennstoffzelle weist einen geschlossenen Anodenraum und eine zusätzliche Metallisierung außerhalb des aktiven Bereiches sowohl auf der Anoden- als auch auf der Kathodenseite der einzelnen elektrischen Zelle der Bi-Brennstoffzelle auf, welche insgesamt aufgrund der Materialien ein sehr geringes Gewicht aufweist, da die meisten Substrate als Folien oder leichte Kunststoffteile ausgebildet werden können. Des Weiteren kann aufgrund der geringen Dicke der einzelnen Bi-Brennstoffzelle der Brennstoff fein dosiert in den Anodenraum abgegeben werden. Dies kann auch ohne Mikroflowfields 20, 20' geschehen.

Ein wesentlicher Bestandteil der Anordnungen in Fign. 1a und 1b sind die Separatorstrukturen in 2, 2', 2 " , welche jeweils auf beiden Seiten in der Y-Richtung hin offen sind. Diese Separatorstrukturen sind in den Fign. 7a bis f näher erläutert.

In Fig. 7a wird eine Separatorstruktur 2 in der X-Z-Ebene gezeigt. Diese Separatorstruktur 2 umfasst eine Trägerstruktur 50, welche in X-Richtung verläuft, von welcher in z- bzw. Querrichtung zusätzliche Elemente 60, 60' angebracht sind, wobei zwischen den zusätzlichen Elementen 60, 60' ein Kanal 70 ausgebildet wird. Durch das große Öffnungsverhältnis der Kanäle 70 kann eine Luftzufuhr mit natürlicher Konvektion erfolgen. Der Randbereich 51 der Separatorstruktur 2 weist sowohl eine elektrische Kontaktierung bzw. Leitung 52 und ein Kanalsystem 53 auf, welche für die Brennstoffzufuhr zu den Bi-Brennstoffzellen ausgebildet ist. Mit Hilfe der elektrischen Kontaktierungen 52 können verschiedene Bi-Brennstoffzellen miteinander elektrisch verbunden werden.

Die Trägerstruktur 50 kann sowohl durch eine durchgehende Platte als auch, zumindest teilweise oder im Ganzen, als Gitter ausgebildet werden. In der in Fig. la gezeigten Darstellung ist die Trägerstruktur 50 als Gitter ausgebildet. Ebenso ist eine Trägerstruktur 50 möglich, bei welcher eine zentrale Strebe die Randbereiche 51 und 51' miteinander verbindet und von dieser Randstrebe in Y-Richtung Querstreben abgehen, an welchen wiederum in Z-Richtung die zusätzlichen Elemente 60 oder 60' angebracht sind. Hierdurch ist es möglich, dass eine einzelne Separatorstruktur die sich gegenüberliegenden Kathoden zweier verschiedener Bi-Brennstoffzellen 1 und 1' durch natürliche Konvektion mit Luft umspült. Es ist auch möglich, dass ein Lüfter mit nur geringem Druckabfall Luft in die Kanäle mit großer Öffnung einbläst.

In Fig. la sind die Größenverhältnisse der Bi-Brennstoffzellen 1, 1' und der Separatorstrukturen 2, 2', 2'' erkennbar. Da die Separatorstruktur der natürlichen Belüftung und dem Abtransport der rekombinierten Protonen dient, ist die Separatorstruktur 2 in der z-Richtung sehr viel dicker ausgebildet als die Bi-Brennstoffzelle 1. Um eine Gewichtsersparnis zu realisieren, können als Materialien für die Separatorstruktur 2 Kunststoff oder Kunststoffverbundwerkstoffe verwendet werden. Eine Ausbildung als Kunststoffgewebe, welches durch eine Harzschicht überzogen wird, kann ebenso die Druckstabilität, welche zum Erzeugen des Anpressdrucks der Bi-Brennstoffzelle 1 durch die Separatoren 2 und 2' von Nöten ist, erhöhen. Dabei kann die Separatorstruktur 2 im Spritzgussverfahren hergestellt werden. Durch die Ausbildung der Trägerstruktur 50 als Gitter ergibt sich eine weitere Gewichtsersparnis.

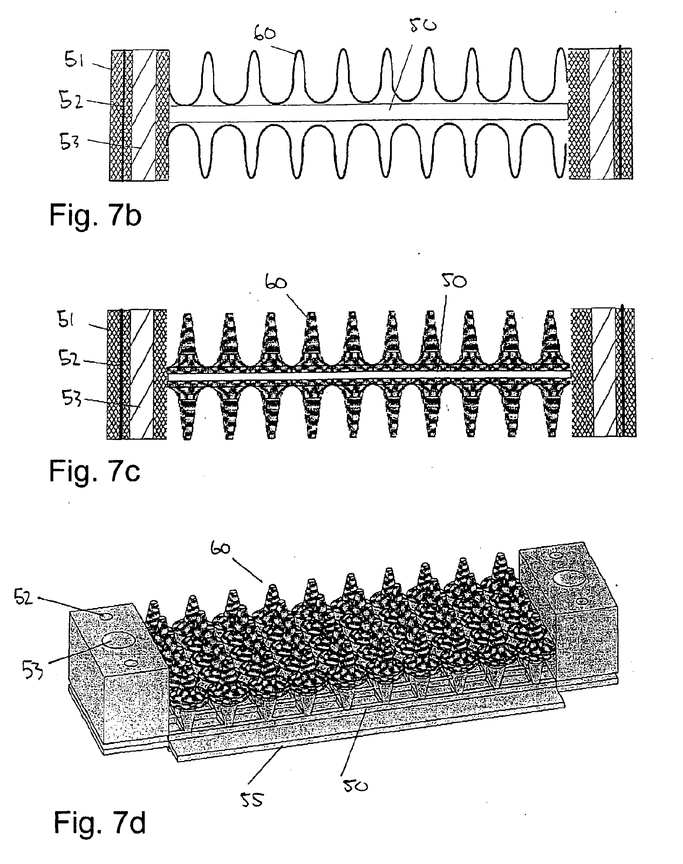

In Fig. 7b ist eine weitere Ausführungsform der Separatorstruktur 2 gegeben. Hierbei sind die zusätzlichen Elemente 60 durch ein Wellblech geformt. Dabei sind die Wellen so verformt, dass ein großer Querschnitt zur Kathode hin entsteht, und nur ein schmaler ungenutzter Querschnitt trägerstrukturseitig vorhanden ist. Die Wellbleche können hierbei mit der Trägerstruktur 50 verklebt, geschweißt oder gelötet werden.

In Fig. 7c ist eine besonders leichte Ausführungsform der Separatorstruktur 2 gegeben. Hier sind die zusätzlichen Elemente 60 als Noppen aus Gewebe beziehungsweise Gewirk geformt und werden anschließend mit einem Kunstharz getränkt. Dadurch entsteht eine sehr offenporige Struktur, die sehr leicht ist, aber auf Grund der zur Basis der Noppen 60 hin vorhandenen Verbreiterung der Noppen 60 eine sehr hohe mechanische Steifigkeit aufweist und somit sehr hohe Anpressdrücke übertragen kann. Hierbei werden die Noppen, welche auch als Stege ausgeführt werden können, auf der Trägerstruktur 50 aufgebracht, wobei die Trägerstruktur 50, wie in Fig. 7d gezeigt, als Gitter ausgebildet ist. Dabei kann die Trägerstruktur 50 zusammen mit den zusätzlichen Elementen 60 in einem Stück ausgefertigt werden. Die zusätzlichen Elemente 60 können aber auch nachträglich mit der Trägerstruktur 50, zum Beispiel mit einem Kunstharz, verbunden werden.

In Fig. 7d ist des Weiteren eine Platte 55 sichtbar, welche die gitterförmige Struktur 50 auf einer Seite abschließt. Somit kann die hier dargestellte Separatorstruktur 2 als Randelement 3 verwendet werden. Hierzu sind die zusätzlichen Elemente 60 nur auf einer Seite der Platte 55 angebracht.

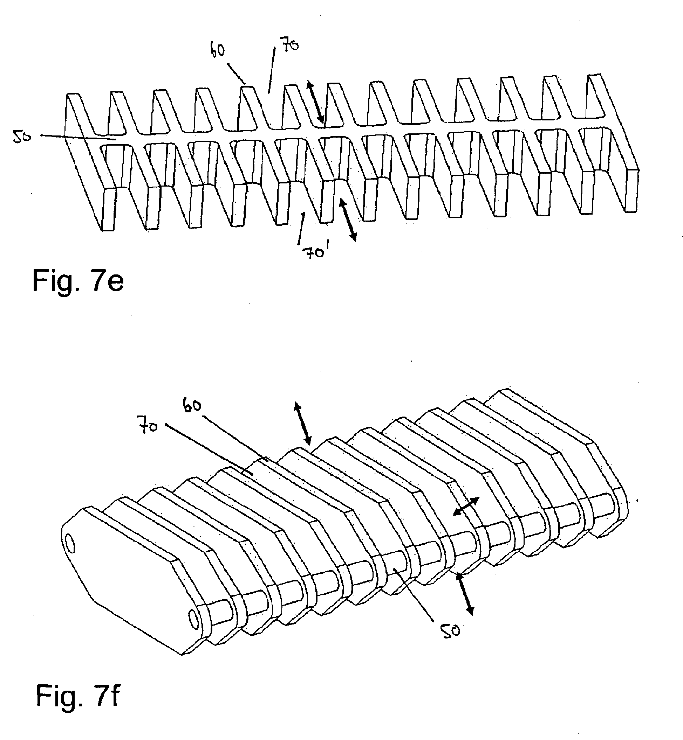

Weitere räumliche Darstellungen einer erfindungsgemäßen Separatorstruktur sind in Fig. 7e und 7f dargestellt. In Fig. 7e sind die zusätzlichen Elemente 60 als Lamellen ausgebildet und zwischen zwei sich gegenüberliegenden Kanälen 70 und 70' besteht keine direkte Verbindung. Der Gasaustausch erfolgt hier passiv, d.h. durch natürliche Konvektion und Diffusion entlang der Richtung der eingezeichneten Pfeile. Ein einzelner Lüfter kann nicht die Belüftung aller Kanäle 70 und 70' vornehmen, wenn die Trägerstruktur 50 in der X-Y Ebene verläuft, wie in Fig. 1 dargestellt.

In Fig. 7f ist eine besonders einfache Separatorstruktur abgebildet. Die Trägerstruktur 50 wird hierbei durch zwei Bolzen gebildet, welche zahlreiche zusätzlichen Elemente 60 miteinander verbindet. Dadurch ergeben sich große durchgehende Kanäle 70, welche sowohl einen passiven Gasaustausch als auch eine Belüftung durch einen Lüfter ermöglichen, da die Luft nur um die Trägerstruktur geleitet werden muss.

Nach den Beschreibungen verschiedener Ausführungsformen der Separatorstruktur 2 in den Fign. 7, wird abschließend noch einmal der Aufbau des Brennstoffzellenstacks in Fig. 1b erläutert. Das Zusammenpressen des Brennstoffzellenstacks, welcher aus den Bi-Brennstoffzellen 1, 1' , 1" , 1''' besteht, wobei die Bi-Brennstoffzellen durch die Separatoren 2, 2' und 2 " voneinander getrennt sind, erfolgt über die Randelemente 3 und 3'. Da die elektrische Verbindung über die elektrischen Kontaktierungen der Bi-Brennstoffzellen 17, bzw. die elektrischen Kontaktierungen der Separatorenstrukturen 52, erfolgt, wobei die Kontaktierungen 52 der Separatorstruktur 2 jeweils mit den Kontaktierungen 17 der Bi-Brennstoffzellen 1 und 1' in Verbindung stehen und analog dazu die Brennstoffzufuhr über die Öffnungen 13, 13' der Bi-Brennstoffzellen und den Öffnungen 53, 53' seitlich an den Separatorenstrukturen 2, 2', 2'' und den als Randelementen 3 und 3' ausgebildeten Separatoren erfolgt, müssen die Randelemente 3, 3' außer der Erzeugung und Übertragung des Anpressdrucks auf die Bi-Brennstoffzellen 1, 1' , 1'', 1''' und die Separatorenstrukturen 2, 2', 2'', keine weitere Funktionalität besitzen. Sie können deshalb, ähnlich den Separatorstrukturen 2, 2', und 2'', aus Leichtbauwerkstoffen hergestellt werden.

In der Fig. 7g ist die Separatorstruktur 200' dargestellt. Die Separatorstruktur 200 unterscheidet sich lediglich aufgrund des kleineren Querschnitts wie in Fig. 1c gezeigt. Die Separatorstruktur 200' weist einen umlaufenden Rahmen 65 auf, welcher die als Lamellen ausgebildeteten zusätzlichen Elemente 60 miteinander verbindet. Die Lamellen verlaufen dabei in der yz-Ebene. Der umlaufende Rahmen 65 ist an seinen in x-Richtung liegenden Rändern 66 zur Dichtung durchgehend und verschlossen. Zwischen den zusätzlichen Elementen 60 verlaufen Stege 67.

Der Rahmen 65 ist derart ausgebildet, dass dieser im äußeren, nicht aktiven Bereich der Brennstoffzelle zum Liegen kommt. Dadurch werden z.B. die in der Fig. 2a sichtbaren Dichtungen 300 der Bi-Brennstoffzelle überdeckt, so dass ein gleichmäßiger Anpressdruck auf die Dichtungen 300 bzw. 300' ausgeübt wird. Die Separatorstruktur 200' bzw. 200 wird analog zu der Separatorstruktur 2 aus Leichtbauwerkstoffen hergestellt.

Als Materialien mit geringem Gewicht und hoher Steifigkeit können geschäumte Metalle, Verbundwerkstoffe, phenolharzgetränkte Gewebestrukturen oder Platten mit oktagonaler Säulenstruktur aus getränkten Geweben eingesetzt werden. Auf diese können zusätzliche Bleche aufgebracht werden, die dünne Spannschrauben oder Spannmittel wie Drähte oder Seile aufnehmen. Die Spannelemente sollten hierbei möglichst nahe am aktiven Bereich der Bi-Brennstoffzellen entlanggehen. Deshalb ist es günstig, in die zur Kühlung und Stromableitung über den aktiven Bereich der Bi-Brennstoffzellen hinausgehende Flächen 18, bzw. 18' mit Löchern zu versehen, durch die die Spannelemente hindurchgehen.

Die Randelemente 3,3' drücken den Brennstoffzellenstack zusammen. Die Randelemente können aus Sandwichplatten hergestellt werden, die mit Metallschaum oder einer Wabenstruktur gefüllt sind und welche jeweils auf einer Seite von dünnen Glas- oder Graphitfaser-Verbundplatten begrenzt werden.

In einer weiteren Ausführungsform des Brennstoffzellenstacks ist es möglich, dass die Brennstoffzufuhren 53 der Separatoren 2 nicht benutzt werden. In diesem Falle müssen die Bi-Brennstoffzellen mit extra Schläuchen oder abschnittsweise flexiblen Rohren verbunden werden, so dass kein Brennstoff aus dem Anodenbereich austreten kann.

An dieser Stelle sei noch einmal erwähnt, dass der durch die Separatorenstruktur ermöglichte Gasaustausch und der übertragene, bzw. hergestellte, Anpressdruck auch bei der Verwendung von normalen Brennstoffzellen zum Tragen kommt. Obwohl bei der Verwendung normaler Brennstoffzellen ein Teil der Gewichtsersparnis gegenüber Bi-Brennstoffzellen eingebüßt wird, ist die aufgrund der Separatorenstruktur gewonnene Gewichtsersparnis weiterhin ein Vorteil gegenüber dem Stand der Technik.

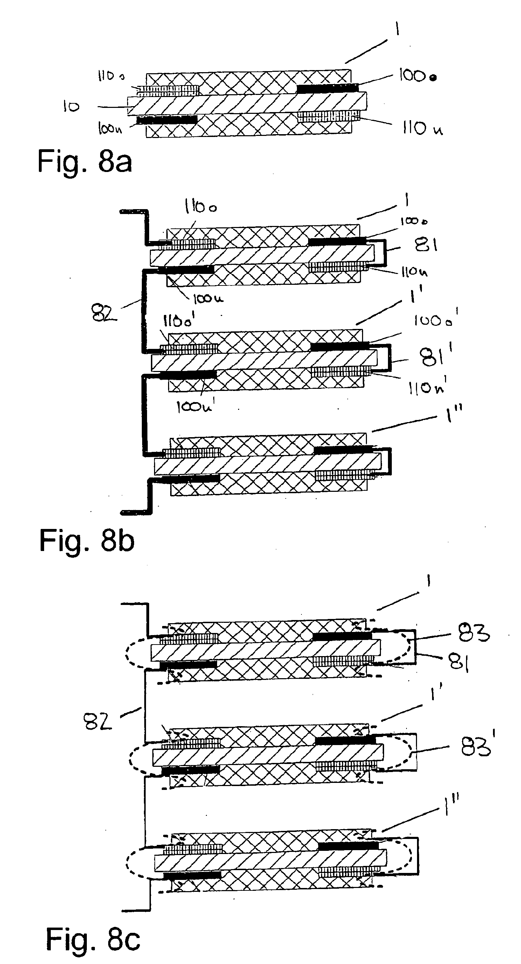

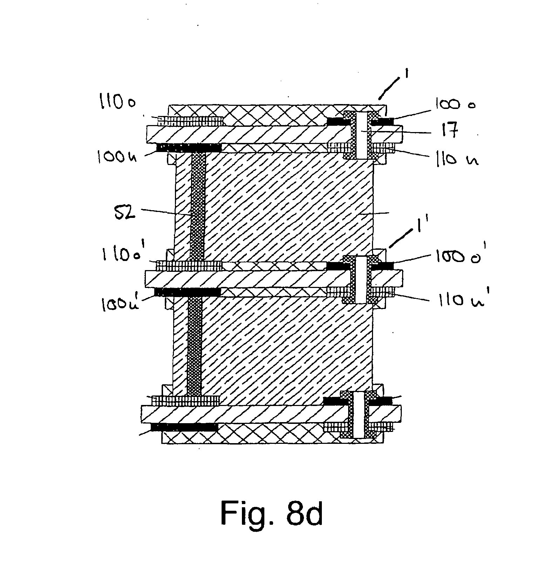

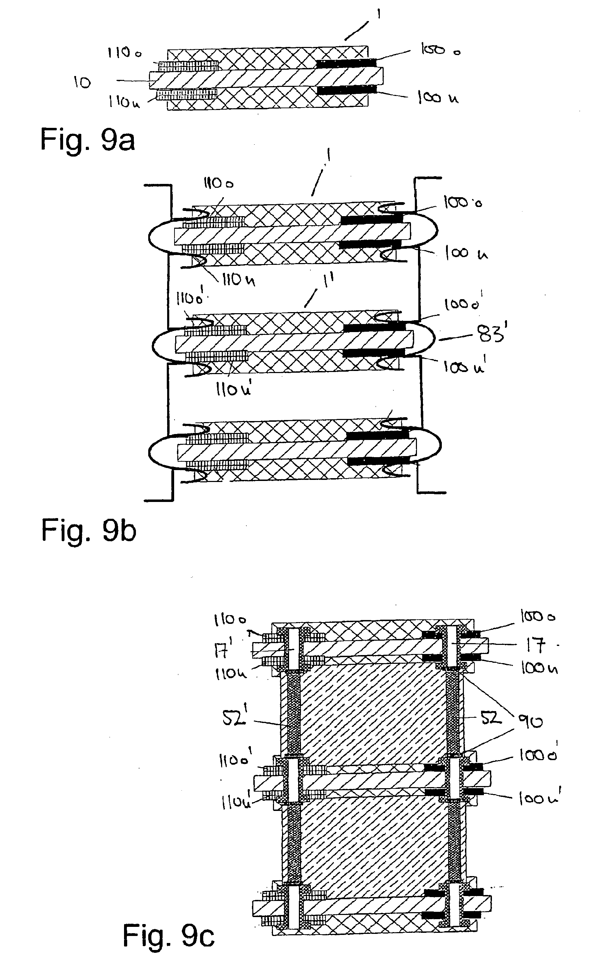

Um die elektrische Verschaltung der Bi-Brennstoffzellen eines erfindungsgemäßen Brennstoffzellenstacks untereinander und der einzelnen Zellen einer einzelnen Bi-Brennstoffzelle untereinander zu erläutern, sind in den Fign. 8 und 9 die elektrischen Verbindungen der Bi-Brennstoffzellen in Reihenschaltung und in Parallelschaltung dargestellt.

In Fig. 8a sind die Metallisierungen 100o und 110o der oberen elektrischen Zelle und die Metallisierungen 100u und 110u der unteren elektrischen Zelle einer Bi-Brennstoffzelle gezeigt, wobei die Metallisierungen 100 mit einer Anode und die Metallisierungen 110 mit einer Kathode verbunden sind.

Um die obere und die untere elektrische Zelle in Reihe zu schalten, werden die Anode der oberen elektrischen Zelle mit der Kathode der unteren elektrischen Zelle über eine elektrische Kontaktierung 81 verbunden wie in Gig. 8b gezeigt.

In Fig. 8b werden die Bi-Brennstoffzellen 1, 1', 1'' miteinander in Reihe geschaltet. Zusätzlich zu den Kontaktierungen 81, werden die Anode der unteren elektrischen Zelle 100u der Bi-Brennstoffzelle 1 und die Kathode der oberen elektrischen Zelle 110o' der Bi-Brennstoffzelle 1' über eine elektrische Kontaktierung 82 verbunden. In Fig. 8b sind die drei Bi-Brennstoffzellen 1, 1', 1'', insgesamt also 6 elektrische Einzelzellen, miteinander verbunden.

In Fig. 8c wird gezeigt wie die Verbindungen 81, 82 mit Hilfe von mechanischen und flexiblen Klammerelementen 83 erfolgen. Die Klammerelemente 83 besitzen an ihrer Innenseite elektrische Kontaktierungen, um die entsprechende Verbindung zwischen zwei sich gegenüberliegenden Anoden und Kathoden unterschiedlicher elektrischer Zellen einer Bi-Brennstoffzelle zu erzeugen. Um die Verbindung zwischen zwei Anoden und Kathoden unterschiedlicher elektrischer Zellen unterschiedlicher Bi-Brennstoffzellen zu erzeugen müssen die zwei Klammerungen aus isolierenden Material bestehen und nur über eine zusätzliche elektrisch leitende Verbindung 82 leitend in Verbindung stehen. Die Klammerungen können in Form eines kleinen flexiblen Kabels ausgebildet werden. Durch diese Form der Verbindung wird erreicht, dass die Klammern keine Kräfte zwischen den Bi-Brennstoffzellen übertragen. Der Anpressdruck der Brennstoffzellen wird lediglich durch das Spannen der Spannelemente erzeugt und über die Separatoren zwischen den einzelnen Bi-Brennstoffzellen übertragen.

In Fig. 8d wird die elektrische Verbindung zwischen den Anoden und Kathoden nicht über Klammern, sondern über die elektrischen Kontaktierungen 17 der Bi-Brennstoffzelle und die elektrischen Kontaktierungen 52 im Randbereich 53 der Separatorstruktur 2 hergestellt. Diese Kontaktierungen können, wie in der Leiterplattentechnologie üblich, durch innen metallisierte Bohrungen hergestellt werden. Dabei erfolgt die Verbindung der Anode 100u mit der elektrischen Kontaktierung 52 und der Kathode 110o' nach der Montage des Brennstoffzellenstacks durch Löten oder leitfähiges Kleben.

Eine Parallelschaltung der Bi-Brennstoffzellen untereinander beziehungsweise der elektrischen Zellen einer einzelnen Bi-Brennstoffzelle kann auf ähnliche Art herbeigeführt werden. Diese Parallelschaltung kann im Kleinleistungsbereich vorteilhaft sein, da die hauptsächlichen Verbraucher nur mit kleinen Spannungen zwischen 1 und 2 Volt arbeiten. Gegebenenfalls ist es auch günstig mehrere parallel geschaltete Brennstoffzellenstacks in Reihe zu schalten. Durch die Parallelschaltung der Bi-Brennstoffzellen im Stack wird die Gesamtfunktion des Brennstoffzellenstacks robuster, da eine einzelne defekte Bi-Brennstoffzelle zwar die Leistung reduziert, aber die Stackspannung nicht so schnell kollabiert und keine Umpolung der einzelnen elektrischen Zellen erfolgt.

Um die einzelnen elektrischen Zellen einer einzelnen Bi-Brennstoffzelle miteinander parallel zu verschalten, werden der Minuspol 100o mit dem Minuspol 100u bzw. der Pluspol 110o mit dem Pluspol 110u miteinander verschaltet. In Fig. 9b wird die Verschaltung von verschiedenen Bi-Brennstoffzellen 1, 1' und 1'' über Klammerelemente 83 realisiert. Die Verbindung über die Klammerelemente 83 kann dabei lösbar ausgebildet sein oder auch unlösbar, indem die Klammern durch Kleben oder Löten fixiert werden.

Im Bild 9c wird die Parallelschaltung der einzelnen Zellen über die elektrischen Kontaktierungen 17 bzw. 17' realisiert. Hierbei verbindet die Kontaktierung 17 die Minuspole der oberen und der unteren elektrischen Zelle der Bi-Brennstoffzelle 1 und die Kontaktierung 17' den Pluspol der oberen und den Pluspol der unteren Zelle der Bi-Brennstoffzelle 1. Über die Kontaktierungen 52 und 52' im Randbereich der Separatoren 2 werden über die Verbindungen 90 der Minuspol 100u der Bi-Brennstoffzelle 1 mit dem Minuspol 100o' der Bi-Brennstoffzelle 1' miteinander verbunden und analog dazu der Pluspol über die Kontaktierung 52'.

Aspekte der Erfindung sind unter anderem:
1. Ein Brennstoffzellenstack, welcher mindestens eine Brennstoffzelle (1) und mindestens zwei Separatorenstrukturen (2, 2'; 200',200'') aufweist, wobei jeweils eine Separatorstruktur (2, 2'; 200',200" ) auf jeweils einer der beiden sich gegenüberliegenden Seiten der Brennstoffzelle (1) angeordnet ist,
   dadurch **gekennzeichnet**, dass die Separatorenstrukturen (2, 2'; 200',200'') auf mindestens einer Seite zur Zulassung von Gasaustausch an der Kathode offen sind
   und im Randbereich (51, 51') der Separatorstruktur (2,2'; 200',200'') ein geschlossenes Kanalsystem (53, 53') für Brennstoff vorgesehen ist.
2. Brennstoffzellenstack nach Aspekt 1, dadurch gekennzeichnet, dass die Brennstoffzelle (1) als Bi-Brennstoffzelle (1) ausgebildet ist und jeweils zwei elektrische isolierte Zellen mit au-ßen liegender Kathode (40, 40') aufweist.
3. Brennstoffzellenstack nach Aspekt 1 oder 2, dadurch gekennzeichnet, dass die Brennstoffzelle (1) einen geschlossenen Anodenbereich aufweist, welcher mit Dichtungen (300, 300') zur Umgebung abgeschlossen ist.
4. Brennstoffzellenstack nach einem der vorhergehenden Aspekte, dadurch gekennzeichnet, dass die Brennstoffzelle (1) einen nicht-aktiven Randbereich (18, 18') aufweist, wobei der Randbereich im Vergleich mit dem aktiven Bereich (25) der Brennstoffzelle (1) eine zusätzliche Metallisierung (120) aufweist.
5. Brennstoffzellenstack nach Aspekt 4, dadurch gekennzeichnet, dass die zusätzliche Metallisierung (120) zur Kühlung der Brennstoffzelle (1) über die Separatorstruktur hinausragt.
6. Brennstoffzellenstack nach einem der vorhergehenden Aspekte, dadurch gekennzeichnet, dass die Brennstoffzelle (1) eine feste, mindestens einschichtige Brennstoffverteilerstruktur (10) aufweist, wobei mindestens eine Schicht als Kanalstruktur und Stromableiter der Anode ausgebildet ist.
7. Brennstoffzellenstack nach Aspekt 6, dadurch gekennzeichnet, dass die Brennstoffverteilerstruktur (10) in Querrichtung auf mindestens einer Seite jeweils ein Mikroflowfield (20, 20') mit Vertiefungen oder Erhebungen (22) aufweist.
8. Brennstoffzellenstack nach einem der vorhergehenden Aspekte, dadurch gekennzeichnet, dass auf mindestens einer Seite der Brennstoffverteilerstruktur (10) mindestens jeweils einen Kathodenstromableiter (40, 40') aufweist, wobei der Kathodenstromableiter (40, 40') Öffnungen mit großem Öffnungsverhältnis aufweist.
9. Brennstoffzellenstack nach einem der vorhergehenden Aspekte, dadurch gekennzeichnet, dass die Separatorstruktur (2, 2' ; 200',200'') zum Übertragen eines Anpressdrucks auf eine Brennstoffzelle (1) eine mechanische Mindeststeifigkeit aufweist.
10. Brennstoffzellenstack nach einem der vorhergehenden Aspekte, dadurch gekennzeichnet, dass die Separatorstruktur (2,2'; 200',200") eine Trägerstruktur (50) aufweist, und in Querrichtung dazu auf mindestens einer Seite weitere zusätzliche Elemente (60, 60') angebracht sind, wobei der Raum zwischen den zusätzlichen Elementen (60, 60') Teile der Kanäle (70) der Separatorstruktur (2,2'; 200',200'') bildet.
11. Brennstoffzellenstack nach Aspekt 10, dadurch gekennzeichnet, dass die Trägerstruktur (50) zumindest teilweise als Gitter oder als Streben mit abstehenden Streben oder als Bolzen ausgebildet ist.
12. Brennstoffzellenstack nach Aspekt 10 oder 11, dadurch gekennzeichnet, dass die zusätzlichen Elemente (60, 60') als Platten oder Säulen oder Zapfen ausgebildet sind.
13. Brennstoffzellenstack nach Aspekt 8 und 10 bis 12, dadurch gekennzeichnet, dass die Abstände der zusätzlichen Elemente (60, 60') zueinander im Wesentlichen gleich den Abständen der Öffnungen der Kathodenstromableiter (40, 40') zueinander sind.
14. Brennstoffzellenstack nach einem der vorhergehenden Aspekte, dadurch gekennzeichnet, dass die Separatorstruktur (2,2' ; 200',200") aus Kunststoff besteht.
15. Brennstoffzellenstack nach einem der vorhergehenden Aspekte, dadurch gekennzeichnet, dass die Separatorstruktur (2,2'; 200',200'') einen passiven Gasaustausch mit der Umgebung zulässt.
16. Brennstoffzellenstack nach einem der vorhergehenden Aspekte, dadurch gekennzeichnet, dass ein Lüfter vorhanden ist um den Gasaustausch an der Separatorstruktur (2,2'; 200',200'') zu erhöhen.
17. Brennstoffzellenstack nach einem der vorherigehenden Aspekte, dadurch gekennzeichnet, dass die Separatorstruktur (2,2'; 200',200'') aus harzgetränktem Kunststoffgewebe besteht.
18. Brennstoffzellenstack nach einem der vorhergehenden Aspekte, dadurch gekennzeichnet, dass die Separatorstruktur (2,2'; 200',200'') aus Wellblech besteht.
19. Brennstoffzellenstack nach einem der vorhergehenden Aspekte, dadurch gekennzeichnet, dass die Separatorstruktur (2,2'; 200',200'') im Randbereich (51, 51') zusätzliche elektrische Kontaktierungen (52, 52') aufweist.
20. Brennstoffzellenstack nach einem der vorhergehenden Aspekte, dadurch gekennzeichnet, dass die Separatorstruktur (2,2'; 200',200'') als Randelement (3) und/oder als Endplatte (3) des Brennstoffzellenstacks gefertigt ist und auf einer Seite geschlossen ausgeführt ist.
21. Brennstoffzellenstack nach einem der vorhergehenden Aspekte, dadurch gekennzeichnet, dass alle Komponenten der Brennstoffzelle (1) aus Kunststoff, oder Kunststoffverbundwerkstoffen oder Kunststoffen mit dünnen Metallisierungen hergestellt sind.
22. Brennstoffzellenstack nach einem der vorhergehenden Aspekte, dadurch gekennzeichnet, dass die Brennstoffzelle (1) eine Wasserstoff-Brennstoffzelle ist.
23. Brennstoffzellenstack nach einem der vorhergehenden Aspekte, dadurch gekennzeichnet, dass die Brennstoffzelle (1) eine Methanol-Brennstoffzelle ist.
24. Brennstoffzellenstack nach einem der vorhergehenden Aspekte, dadurch gekennzeichnet, dass die Brennstoffzelle (1) eine Ethanol-Brennstoffzelle ist.
25. Brennstoffzellenstack nach einem der vorhergehenden Aspekte, dadurch gekennzeichnet, dass das Volumen des Brennstoffzellenstacks zwischen 1cm^3 und 500cm^3 liegt.
26. Brennstoffzellenstack nach einem der vorhergehenden Aspekte, dadurch gekennzeichnet, dass mindestens eine Bi-Brennstoffzelle (1) vorhanden ist und die zwei einzelnen Zellen der Bi-Brennstoffzelle (1) in Reihe oder parallel geschaltet sind.
27. Brennstoffzellenstack nach einem der vorhergehenden Aspekte, dadurch gekennzeichnet, dass mindestens zwei Brennstoffzellen (1, 1') vorhanden sind, und die Verbindung (81, 82, 83) zwischen zwei Brennstoffzellen (1, 1') mechanisch flexibel und elektrisch leitend ausgebildet ist.
28. Brennstoffzellenstackanordnung, enthaltend mindestens zwei Brennstoffzellenstacks nach einem der vorhergehenden Aspekte, dadurch gekennzeichnet, dass die Brennstoffzellenstacks in Reihe oder parallel geschaltet sind.
29. Brennstoffzellenstackanordnung nach einem der vorhergehenden Aspekte, dadurch gekennzeichnet, dass dieser tragbar ausgeführt ist.
30. Ein Fluggerät, dadurch gekennzeichnet, dass ein Brennstoffzellenstack nach einem der Aspekte 1 bis 29 vorhanden ist.

## Patentansprüche

1. Brennstoffzellenstack zur Erzeugung elektrischer Energie, welcher mindestens eine Brennstoffzelle (1) und mindestens zwei Separatorenstrukturen (2, 2'; 200',200'') aufweist, wobei jeweils eine Separatorstruktur (2, 2'; 200',200'') auf jeweils einer der beiden sich gegenüberliegenden Seiten der Brennstoffzelle (1) angeordnet ist, wobei die Separatorenstrukturen (2, 2'; 200',200'') auf mindestens einer Seite zur Zulassung von Gasaustausch an der Kathode offen sind
und im Randbereich (51, 51') der Separatorstruktur (2,2'; 200',200'') ein geschlossenes Kanalsystem (53, 53') für Brennstoff vorgesehen ist, wobei die Brennstoffzelle (1) als Bi-Brennstoffzelle (1) mit mindestens einer Brennstoffverteilerschicht (10) ausgebildet ist und jeweils zwei elektrische isolierte Zellen mit außen liegender Kathode (40, 40') aufweist und
die Brennstoffzelle (1) einen nicht-aktiven Randbereich (18, 18') aufweist, wobei auf die Brennstoffverteilerschicht (10) im Randbereich der Brennstoffzelle im Vergleich mit dem aktiven Bereich (25) der Brennstoffzelle (1) eine verstärkte Metallisierung (120) aufgebracht ist und
die auf die Brennstoffverteilerschicht (10) aufgebrachte verstärkte Metallisierung (120) zur Kühlung der Brennstoffzelle (1) über die Separatorstruktur hinausragt.

2. Brennstoffzellenstack nach Anspruch 1, **dadurch gekennzeichnet, dass** auf mindestens einer Seite der Brennstoffverteilerstruktur (10) mindestens jeweils einen Kathodenstromableiter (40, 40') aufweist, wobei der Kathodenstromableiter (40, 40') Öffnungen mit großem Öffnungsverhältnis aufweist.

3. Brennstoffzellenstack nach einem der vorhergehenden Ansprüche, **dadurch gekennzeichnet, dass** die Separatorstruktur (2,2'; 200',200'') zum Übertragen eines Anpressdrucks auf eine Brennstoffzelle (1) eine mechanische Mindeststeifigkeit aufweist.

4. Brennstoffzellenstack nach einem der vorhergehenden Ansprüche, **dadurch gekennzeichnet, dass** die Separatorstruktur (2,2'; 200',200'') eine Trägerstruktur (50) aufweist, und in Querrichtung dazu auf mindestens einer Seite weitere zusätzliche Elemente (60, 60') angebracht sind, wobei der Raum zwischen den zusätzlichen Elementen (60, 60') Teile der Kanäle (70) der Separatorstruktur (2,2'; 200',200'') bildet.

5. Brennstoffzellenstack nach Anspruch 4, **dadurch gekennzeichnet, dass** die zusätzlichen Elemente (60, 60') als Platten oder Säulen oder Zapfen ausgebildet sind.

6. Brennstoffzellenstack nach einem der vorhergehenden Ansprüche, **dadurch gekennzeichnet, dass** die Separatorstruktur (2,2'; 200',200'') aus Kunststoff besteht.

7. Brennstoffzellenstack nach einem der vorhergehenden Ansprüche, **dadurch gekennzeichnet, dass** die Separatorstruktur (2,2'; 200',200'') einen passiven Gasaustausch mit der Umgebung zulässt.

8. Brennstoffzellenstack nach einem der vorhergehenden Ansprüche, **dadurch gekennzeichnet, dass** ein Lüfter vorhanden ist um den Gasaustausch an der Separatorstruktur (2,2'; 200',200'') zu erhöhen.

9. Brennstoffzellenstack nach einem der vorhergehenden Ansprüche, **dadurch gekennzeichnet, dass** die Separatorstruktur (2,2'; 200',200'') aus harzgetränktem Kunststoffgewebe besteht.

10. Brennstoffzellenstack nach einem der vorhergehenden Ansprüche, **dadurch gekennzeichnet, dass** die Separatorstruktur (2,2'; 200',200'') aus Wellblech besteht.

11. Brennstoffzellenstack nach einem der vorhergehenden Ansprüche, **dadurch gekennzeichnet, dass** die Separatorstruktur (2,2'; 200',200'') im Randbereich (51, 51') zusätzliche elektrische Kontaktierungen (52, 52') aufweist.

12. Brennstoffzellenstack nach einem der vorhergehenden Ansprüche, **dadurch gekennzeichnet, dass** die Separatorstruktur (2,2'; 200',200'') als Randelement (3) und/oder als Endplatte (3) des Brennstoffzellenstacks gefertigt ist und auf einer Seite geschlossen ausgeführt ist.

13. Brennstoffzellenstack nach einem der vorhergehenden Ansprüche, **dadurch gekennzeichnet, dass** alle Komponenten der Brennstoffzelle (1) aus Kunststoff, oder Kunststoffverbundwerkstoffen oder Kunststoffen mit dünnen Metallisierungen hergestellt sind.

14. Brennstoffzellenstack nach einem der vorhergehenden Ansprüche, **dadurch gekennzeichnet, dass** das Volumen des Brennstoffzellenstacks zwischen 1cm^3 und 500cm^3 liegt.

15. Brennstoffzellenstack nach einem der vorhergehenden Ansprüche, **dadurch gekennzeichnet, dass** mindestens eine Bi-Brennstoffzelle (1) vorhanden ist und die zwei einzelnen Zellen der Bi-Brennstoffzelle (1) in Reihe oder parallel geschaltet sind und/oder dass mindestens zwei Brennstoffzellen (1, 1') vorhanden sind, und die Verbindung (81, 82, 83) zwischen zwei Brennstoffzellen (1, 1') mechanisch flexibel und elektrisch leitend ausgebildet ist.

## Claims

1. Fuel cell stack for generating electric energy which has at least one fuel cell (1) and at least two separator structures (2, 2'; 200', 200"), respectively one separator structure (2, 2'; 200', 200") being disposed respectively on one of the two oppositely situated sides of the fuel cell (1),
wherein the separator structures (2, 2'; 200', 200") are open on at least one side in order to allow the exchange of gas at the cathode, and, in the edge region (51, 51') of the separator structure (2, 2'; 200', 200"), a closed channel system (53, 53') for fuel is provided,
wherein the fuel cell (1) is configured as a bi-fuel cell (1) with at least one fuel distributor structure (10) and has respectively two electrical insulated cells with externally situated cathode (40, 40'), and
the fuel cell (1) has a non-active edge region (18, 18'), the fuel distributor structure (10) having a reinforced metallisation (120) in the edge region, in comparison with the active region (25) of the fuel cell (1),
and wherein the reinforced metallisation (120) for cooling the fuel cell (1) protrudes beyond the separator structure.

2. Fuel cell stack according to claim 1, **characterised in that**, on at least one side of the fuel distributor structure (10), it has at least respectively one cathode current conductor (40, 40'), the cathode current conductor (40, 40') having openings with a large opening ratio.

3. Fuel cell stack according to one of the preceding claims, **characterised in that** the separator structure (2, 2'; 200', 200") has a mechanical minimum rigidity in order to transmit a contact pressure to a fuel cell (1).

4. Fuel cell stack according to one of the preceding claims, **characterised in that** the separator structure (2, 2'; 200', 200") has a carrier structure (50) and, in the transverse direction relative thereto, further additional elements (60, 60') are fitted on at least one side, the space between the additional elements (60, 60') forming parts of channels (70) of the separator structure (2, 2'; 200', 200").

5. Fuel cell stack according to claim 4, **characterised in that** the additional elements (60, 60') are configured as plates or columns or pins.

6. Fuel cell stack according to one of the preceding claims, **characterised in that** the separator structure (2, 2'; 200', 200") is made from plastic material.

7. Fuel cell stack according to one of the preceding claims, **characterised in that** the separator structure (2, 2'; 200', 200") allows a passive exchange of gas with the environment.

8. Fuel cell stack according to one of the preceding claims, **characterised in that** a fan is present in order to increase the exchange of gas at the separator structure (2, 2'; 200', 200").

9. Fuel cell stack according to one of the preceding claims, **characterised in that** the separator structure (2, 2'; 200', 200") comprises resin-saturated plastic woven fabric.

10. Fuel cell stack according to one of the preceding claims, **characterised in that** the separator structure (2, 2'; 200', 200") comprises an undulating metal sheet.

11. Fuel cell stack according to one of the preceding claims, **characterised in that** the separator structure (2, 2'; 200', 200") has additional electrical contactings (52, 52') in the edge region (51, 51').

12. Fuel cell stack according to one of the preceding claims, **characterised in that** the separator structure (2, 2'; 200', 200") is manufactured as an edge element (3) and/or end plate (3) of the fuel cell stack and has a closed configuration on one side.

13. Fuel cell stack according to one of the preceding claims, **characterised in that** all the components of the fuel cell (1) are produced from plastic material, or plastic composite materials or plastic materials with thin metallisations.

14. Fuel cell stack according to one of the preceding claims, **characterised in that** the volume of the fuel cell stack is between 1 cm^3 and 500 cm^3.

15. Fuel cell stack according to one of the preceding claims, **characterised in that** at least one bi-fuel cell (1) is present and the two individual cells of the bi-fuel cell (1) are connected in series or in parallel, and/or
that at least two fuel cells (1, 1') are present, and the connection (81, 82, 83) between two fuel cells (1, 1') has a mechanically flexible and electrically conductive configuration.

## Revendications

1. Pile de cellules à combustible pour la production d'énergie électrique, qui comprend au moins une cellule à combustible (1) et au moins deux structures de séparation (2, 2' ; 200', 200"), une structure de séparation (2, 2' ; 200', 200") étant disposée sur chacun des deux côtés opposés de la cellule de combustible (1), les structures de séparation (2, 2' ; 200', 200") étant ouvertes sur au moins un côté afin de permettre un échange de gaz au niveau de la cathode et, au bord (51, 51') de la structure de séparation (2, 2' ; 200', 200"), un système fermé de canaux (53, 53') étant prévu pour le carburant, dans laquelle la cellule à combustible (1) est conçue comme une cellule bi-combustible (1) avec au moins une couche de répartition de combustible (10) et comprend deux cellules isolées électriquement avec une cathode externe (40, 40') et la cellule à combustible (1) comprend un bord non actif (18, 18'), une métallisation (120), renforcée par rapport à la zone active (25) de la cellule à combustible (1) est appliquée sur la couche de répartition de combustible (10) sur le bord de la cellule à combustible et la métallisation (120) renforcée appliquée sur la couche de répartition de combustible (10) dépasse de la structure de séparation pour le refroidissement de la cellule à combustible (1).

2. Pile de cellules à combustible selon la revendication 1, **caractérisée en ce que**, sur au moins un côté de la structure de répartition du combustible (10), se trouve un collecteur de courant de cathode (40, 40'), le collecteur de courant de cathode (40,40') présentant des ouvertures avec un grand rapport d'ouverture.

3. Pile de cellules à combustible selon l'une des revendications précédentes, **caractérisée en ce que** la structure de séparation (2, 2' ; 200', 200") présente, pour la transmission d'une pression de compression à une cellule à combustible (1), une rigidité mécanique minimale.

4. Pile de cellules à combustible selon l'une des revendications précédentes, **caractérisée en ce que** la structure de séparation (2, 2' ; 200', 200") comprend une structure de support (50) et, dans la direction transversale, sur au moins un côté, sont montés des éléments supplémentaires (60, 60'), l'espace entre les éléments supplémentaires (60, 60') formant des parties des canaux (70) de la structure de séparation (2, 2' ; 200', 200").

5. Pile de cellules à combustible la revendication 4, **caractérisée en ce que** les éléments supplémentaires (60, 60') sont conçus comme des plaques ou des colonnes ou des axes.

6. Pile de cellules à combustible selon l'une des revendications précédentes, **caractérisée en ce que** la structure de séparation (2, 2' ; 200', 200") est constituée de matière plastique.

7. Pile de cellules à combustible selon l'une des revendications précédentes, **caractérisée en ce que** la structure de séparation (2, 2' ; 200', 200") permet un échange de gaz passif avec l'environnement.

8. Pile de cellules à combustible selon l'une des revendications précédentes, **caractérisée en ce qu'**un ventilateur est présent pour augmenter l'échange de gaz au niveau de la structure de séparation (2, 2' ; 200', 200").

9. Pile de cellules à combustible selon l'une des revendications précédentes, **caractérisée en ce que** la structure de séparation (2, 2' ; 200', 200") est constituée d'un tissu en matière plastique imprégné de résine.

10. Pile de cellules à combustible selon l'une des revendications précédentes, **caractérisée en ce que** la structure de séparation (2, 2' ; 200', 200") est constituée d'une tôle ondulée.

11. Pile de cellules à combustible selon l'une des revendications précédentes, **caractérisée en ce que** la structure de séparation (2, 2' ; 200', 200") comprend, au niveau du bord (51, 51'), des contacts électriques supplémentaires (52, 52').

12. Pile de cellules à combustible selon l'une des revendications précédentes, **caractérisée en ce que** la structure de séparation (2, 2' ; 200', 200") est conçue sous la forme d'un élément de bord (3) et/ou comme une plaque d'extrémité (3) de la pile de cellules à combustible et est fermée sur un côté.

13. Pile de cellules à combustible selon l'une des revendications précédentes, **caractérisée en ce que** tous les composants de la cellule à combustible (1) sont constitués de matière plastique ou de matériaux composites de type matières plastiques ou de matières plastiques avec des métallisations minces.

14. Pile de cellules à combustible selon l'une des revendications précédentes, **caractérisée en ce que** le volume de la pile de cellules à combustible est entre 1 cm³ et 500 cm³.

15. Pile de cellules à combustible selon l'une des revendications précédentes, **caractérisée en ce qu'**au moins une cellule bi-combustible (1) existe et les deux cellules séparées de la cellule bi-combustible (1) sont branchées en série ou en parallèle et/ou **en ce qu'**au moins deux cellules à combustible (1, 1') existent et la liaison (81, 82, 83) entre deux cellules à combustible (1, 1') sont conçues de façon à être mécaniquement flexibles et électriquement conductrices.
